(19) Europäisches Patentamt
European Patent Office
Office européen des brevets

(11) **EP 3 493 420 B1**

(12) **FASCICULE DE BREVET EUROPEEN**

(45) Date de publication et mention de la délivrance du brevet:
**01.07.2020 Bulletin 2020/27**

(51) Int Cl.:
***H04B 7/0452*** *(2017.01)* ***H04B 7/06*** *(2006.01)*

(21) Numéro de dépôt: **18207698.4**

(22) Date de dépôt: **22.11.2018**

(54) **PROCÉDÉ ET SYSTÈME DE MULTIPLEXAGE SPATIAL DE LIAISONS DANS UN RÉSEAU DE COMMUNICATION**

VERFAHREN UND SYSTEM ZUM RÄUMLICHEN MULTIPLEXEN VON VERBINDUNGEN IN EINEM KOMMUNIKATIONSNETZ

METHOD AND SYSTEM FOR SPATIAL MULTIPLEXING OF CONNECTIONS IN A COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1701265**

(43) Date de publication de la demande:
**05.06.2019 Bulletin 2019/23**

(73) Titulaire: **Thales**
**92400 Courbevoie (FR)**

(72) Inventeurs:
• **PIPON, François**
**92622 GENNEVILLIERS CEDEX (FR)**

• **CHEVALIER, Pascal**
**92622 GENNEVILLIERS CEDEX (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **NGUYEN SINH LE HONG ET AL: "On the Mutual Orthogonality of Millimeter-Wave Massive MIMO Channels", 2015 IEEE 81ST VEHICULAR TECHNOLOGY CONFERENCE (VTC SPRING), IEEE, 11 mai 2015 (2015-05-11), pages 1-5, XP033167440, DOI: 10.1109/VTCSPRING.2015.7145972**

**Description**

L'invention concerne un procédé et un système de multiplexage spatial de liaisons dans un réseau de communication utilisant une structure de type à entrées multiples et sorties multiples ou MIMO distribué avec un traitement anti-interférences à l'émission et à la réception.

La présente invention permet la cohabitation simultanée et sur la même bande de fréquence de plusieurs liaisons MIMO transmettant chacune un seul train binaire d'information, c'est-à-dire sans multiplexage spatial de plusieurs trains binaires indépendants.

Dans le but de minimiser le nombre d'antennes en émission et en réception, cette cohabitation requiert des traitements de lutte anti-interférences, aussi bien à l'émission qu'à la réception au niveau de chaque utilisateur. Ces traitements utilisent la connaissance ou l'estimation a priori des matrices de canal de chaque liaison.

Pour une liaison donnée, le traitement en émission correspond à un précodage spatial des informations à transmettre, alors que le traitement en réception met en œuvre un postcodage de l'information transmise. La stratégie qui minimise le nombre d'antennes global du réseau consiste à précoder les liaisons afin qu'au niveau de chaque récepteur, les interférences provenant des différents émetteurs soient alignées dans un même sous-espace. On parle alors de techniques d'alignement d'interférences (AI).

Les techniques d'alignement d'interférences se sont développées à partir de la fin des années 2000 avec les travaux de Jafar, en particulier dans les publications suivantes :

S.A. Jafar, S. Shamai, "Degrees of freedom region of the MIMO X channel", IEEE Transactions on Information Theory, Vol. 54, N°1, pp. 151-170, 2008,
V.R. Cadambe, S. A. Jafar, " Interference alignment and degrees of freedom of the K-User interference channel", IEEE Transactions on Information Theory, Vol 54, N°8, pp. 3425-3441, 2008,
V.R. Cadambe, S. A. Jafar, "Interference Alignment and the Degrees of Freedom of Wireless X Networks," IEEE Trans. Inf. Theory, Vol. 55, no. 9, Sep. 2009.

Depuis ces travaux pionniers, la technique de l'alignement d'interférences a suscité un intérêt croissant dans la communauté scientifique et de nombreuses publications scientifiques sont parues sur le sujet.

Ces publications peuvent être structurées en deux grandes familles. La première famille concerne le calcul de bornes sur le nombre de degrés de liberté spatiaux disponibles pour de tels systèmes en fonction du nombre d'antennes en émission et en réception, comme il est décrit, par exemple, dans les publications précitées.

La seconde famille concerne le calcul des précodeurs-postcodeurs permettant d'optimiser un critère particulier tel que la somme des débits transmis au niveau des différentes liaisons ou encore le débit minimal d'une liaison ou le rapport signal+interférences à bruit ou SINR (abréviation anglosaxonne de signal-to-interference-plus-noise ratio ou SNRI) au niveau de chaque récepteur. Un état de l'art assez complet de ces travaux est effectué dans la thèse de E. Aycan Beyazit, « Interference Alignment Techniques for Heterogeneous Wireless Networks », Thèse de doctorat, Sept. 2016. Les sigles SINR et SNRI désignent dans la suite de la description un même objet.

La quasi-totalité des schémas d'émission-réception ou précodeurs-postcodeurs développés dans l'art antérieur optimisent un critère de débit global ou local, ou un critère de qualité. Ces critères sont obtenus par convergence de procédures itératives très coûteuses à mettre en œuvre comme il est décrit dans la thèse précitée.

NGUYEN SINH LE HONG ET AL: "On the Mutual Orthogonality of Millimeter-Wave Massive MIMO Channels",2015 IEEE 81ST VEHICULAR TECHNOLOGY CONFERENCE (VTC SPRING), IEEE, 11 mai 2015 (2015-05-11), pages 1-5, XP033167440,DOI: 10.1109/VTCSPRING.2015.7145972, décrit un procédé selon le préambule de la revendication 1.

Les systèmes de précodage-postcodage actuels, malgré les avantages qu'ils procurent, se révèlent itératifs et très coûteux à mettre en œuvre. Ils sont actuellement difficilement compatibles d'une mise en œuvre opérationnelle. A la connaissance du demandeur, l'art antérieur n'offre pas actuellement de solutions d'alignement d'interférences, non itératives, simples à mettre en œuvre et compatibles d'une mise en œuvre opérationnelle.

Dans la suite de la description, on appelle « lien descendant DL » (DownLink) le lien entre un nœud central et un ou plusieurs utilisateurs, et « lien montant UL » (Uplink) le lien entre un ou plusieurs utilisateurs et le nœud central. On notera aussi $K_e$ le nombre d'antennes sélectionnées pour l'émission et $K_r$ le nombre d'antennes sélectionnées pour la réception de signaux, ces antennes pouvant appartenir à un nœud central ou bien à un utilisateur, selon le sens de la communication, lien descendant ou lien montant.

Le mot antenne et le mot capteur désignent dans la présente description un même élément constituant un réseau d'antennes.

L'invention concerne un procédé pour multiplexer spatialement des liaisons de communications de type multiple entrées multiple sorties MIMO, pour des liens descendants DL et/ou pour des liens montants UL, au sein d'un réseau de communication comprenant au moins un nœud central NC comprenant un réseau émission/réception et au moins

deux utilisateurs $T_1$, $T_2$, un utilisateur étant équipé d'un réseau émission/réception caractérisé en ce que :

- Pour calculer les coefficients utilisés à l'émission (précodage) on impose aux deux vecteurs canaux associés à chacun des deux utilisateurs $T_1$, $T_2$, d'être orthogonaux au niveau du réseau de réception nœud central UL ou du réseau de réception des utilisateurs DL,
- on détermine les coefficients en émission d'un signal pour la liaison descendante DL émis du nœud central NC vers au moins un utilisateur $T_i$ comportant $K_e$ antennes d'émission, en exécutant au moins les étapes suivantes :

  ○ Calculer les vecteurs de précodage $v_1$ et $v_2$ associés respectivement aux deux utilisateurs $T_1$, $T_2$, en les recherchant comme une combinaison linéaire des vecteurs propres associés aux deux plus grandes valeurs propres de la décomposition en valeurs singulières SVD des matrices de canal $H_1$ et $H_2$ de la liaison descendante, où $\alpha$ et $\lambda$ sont deux variables complexes :

$$v_1 = \frac{v_{11} + \alpha^* v_{12}}{\sqrt{1 + |\alpha|^2}}$$

$$v_2 = \frac{v_{21} + \lambda v_{22}}{\sqrt{1 + |\lambda|^2}}$$

$\alpha$ est solution d'une équation du second degré :

$$a\,\alpha^2 + b\,\alpha + c = 0$$

avec :

$$\begin{cases} a = \sigma_{12}^2(\sigma_{21}^2 - \sigma_{22}^2)v_{12}^H v_{21} v_{12}^H v_{22} \\ b = (\sigma_{12}^2\sigma_{21}^2 - \sigma_{22}^2\sigma_{11}^2)v_{11}^H v_{21} v_{12}^H v_{22} + (\sigma_{21}^2\sigma_{11}^2 - \sigma_{12}^2\sigma_{22}^2)v_{12}^H v_{21} v_{11}^H v_{22} \\ c = \sigma_{11}^2(\sigma_{21}^2 - \sigma_{22}^2)v_{11}^H v_{21} v_{11}^H v_{22} \end{cases}$$

on obtient deux valeurs pour $\alpha$ et on détermine pour chaque valeur $\alpha_1$ $\alpha_2$ la valeur de $\lambda$ associée par la formule:

$$\lambda = -\frac{\alpha\,\sigma_{12}^2\,v_{12}^H v_{21} + \sigma_{11}^2\,v_{11}^H v_{21}}{\alpha\,\sigma_{12}^2\,v_{12}^H v_{22} + \sigma_{11}^2\,v_{11}^H v_{22}}$$

  ○ choisir parmi les deux couples de valeurs $(\alpha_1, \lambda_1)$ et $(\alpha_2, \lambda_2)$ le couple qui maximise une fonction des *SNIR* associés aux deux utilisateurs, définis comme suit :

$$\begin{cases} SNIR_1 = \dfrac{\sigma_{11}^2 + \sigma_{12}^2|\alpha|^2}{1 + |\alpha|^2} \\ SNIR_2 = \dfrac{\sigma_{21}^2 + \sigma_{22}^2|\lambda|^2}{1 + |\lambda|^2} \end{cases}$$

où $\sigma_{ij}^2$ correspond au carré de la valeur singulière j de la matrice canal Hi.

La fonction à maximiser correspond, par exemple, à Min($SNIR_1$, $SNIR_2$) ou à la somme $SNIR_1$+, $SNIR_2$ ou à la somme log2(1+$SNIR_1$) + log2(1 + $SNIR_2$).

Lorsque le nombre d'antennes à l'émission est supérieur à deux, le procédé comporte une ou plusieurs étapes d'itération en recherchant les vecteurs $v_1(j)$ et $v_2(j')$ formés à partir des vecteurs propres $v_{11}$ et $v_{21}$ associés à la valeur maximale de chacune des valeurs singulières des SVD des deux matrices de canal des deux utilisateurs $T_1$, $T_2$ et aux vecteurs propres $v_{1j}$ et $v_{2j'}$

$$\begin{cases} v_1(j) = \dfrac{v_{11} + \alpha(j)^* \, v_{1j}}{\sqrt{1 + |\alpha(j)|^2}} \\[4mm] v_2(j') = \dfrac{v_{21} + \lambda(j') \, v_{2j'}}{\sqrt{1 + |\lambda(j')|^2}} \end{cases}$$

où $j$ et $j'$ sont des indices compris entre deux et $K_e$ et en choisissant les valeurs de $\alpha(j)$ et $\lambda(j')$ qui conduisent à une maximisation d'une fonction de $SNIR_1$ et de $SNIR_2$.

Pour un canal de propagation de dimension égale à un, on détermine les valeurs des coefficients des filtres de précodage à partir d'une combinaison linéaire du premier vecteur propre des SVD effectuées sur les deux matrices de canal et des vecteurs propres $v_{1j}$ et $v_{2j'}$ qui maximisent respectivement $\left| v_{1j}^H v_{21} \right|$ et $\left| v_{11}^H v_{2j'} \right|$.

Dans le cas de la liaison montante d'un utilisateur vers le nœud central, le procédé comporte les étapes suivantes :

o Calculer les pondérations pour l'émission $v_{ul,1}$ et $v_{ul,2}$ du signal dans un espace engendré par les deux premiers vecteurs propres issus des décompositions en valeurs singulières SVD effectuées sur les matrices de canal $H_{ul,1}$ et $H_{ul,2}$ :

$$v_{ul,1} = \frac{v_{ul,11} + \alpha^* v_{ul,12}}{\sqrt{1 + |\alpha|^2}}$$

$$v_{ul,2} = \frac{v_{ul,21} + \lambda \, v_{ul,22}}{\sqrt{1 + |\lambda|^2}}$$

où le couple $(\alpha, \lambda)$ est solution de l'équation :

$$(A + \lambda B) + \alpha(C + \lambda D) = 0$$

avec :

$$\begin{cases} A = \sigma_{ul,11} \sigma_{ul,21} u_{ul,11}^H u_{ul,21} \\ B = \sigma_{ul,11} \sigma_{ul,22} u_{ul,11}^H u_{ul,22} \\ C = \sigma_{ul,12} \sigma_{ul,21} u_{ul,12}^H u_{ul,21} \\ D = \sigma_{ul,12} \sigma_{ul,22} u_{ul,12}^H u_{ul,22} \end{cases}$$

∘ choisir parmi les couples $(\alpha, \lambda)$ les couples qui maximisent une fonction des deux SINR $(SNIR_1, SNIR_2)$ associés aux deux utilisateurs :

$$\begin{cases} SNIR_1 = \dfrac{\sigma_{ul,11}^2 + \sigma_{ul,12}^2 |\alpha|^2}{1 + |\alpha|^2} \\[2em] SNIR_2 = \dfrac{\sigma_{ul,21}^2 + \sigma_{ul,22}^2 |\lambda|^2}{1 + |\lambda|^2} \end{cases}$$

Les étapes sont par exemple itérées en recherchant les vecteurs $v_{ul,1}(j)$ et $v_{ul,2}(j')$ formés à partir des différents vecteurs propres associés aux deux matrices de canal suivant la formule :

$$v_1(j) = \frac{v_{11} + \alpha(j)^* v_{1j}}{\sqrt{1 + |\alpha(j)|^2}}$$

$$v_2(j') = \frac{v_{21} + \lambda(j') v_{2j'}}{\sqrt{1 + |\lambda(j')|^2}}$$

et on choisit le couple $(j,j')$ qui conduit à la maximisation d'une fonction des deux SINR ($SNIR_1, SNIR_2$).

L'invention concerne aussi un système pour multiplexer spatialement des liaisons de communications de type multiple entrées multiple sorties MIMO, pour des liens descendants DL et/ou pour des liens montants UL, au sein d'un réseau de communication comprenant au moins un nœud central NC comprenant un réseau émission/réception et au moins deux utilisateurs $T_1$, $T_2$, un utilisateur étant équipé d'un réseau émission/réception caractérisé en ce que :

  ∘ un utilisateur est équipé d'un processeur configuré pour exécuter les étapes du procédé selon l'invention, ledit processeur comprenant un module de précodage ayant pour fonction de déterminer les coefficients à utiliser au niveau de l'émission et un module de postcodage ayant pour fonction de déterminer les coefficients à utiliser au niveau de la réception,
  ∘ le nœud central comprend un processeur configuré pour exécuter les étapes du procédé selon l'invention, ledit processeur comprenant un module de précodage configuré pour déterminer les coefficients à utiliser au niveau de l'émission et module de postcodage ayant pour fonction de déterminer les coefficients à utiliser au niveau de la réception.

D'autres caractéristiques et avantages de la présente invention apparaîtront mieux à la lecture de la description d'exemples de réalisation annexée des figures qui représentent :

- Figure 1, un exemple de système pour la mise en œuvre du procédé,
- Figure 2, un schéma pour le sens montant,
- Figure 3, un schéma pour le sens descendant,
- Figure 4, un exemple de structure de trame, et
- Figure 5, une illustration des étapes mises en œuvre par le procédé selon l'invention.

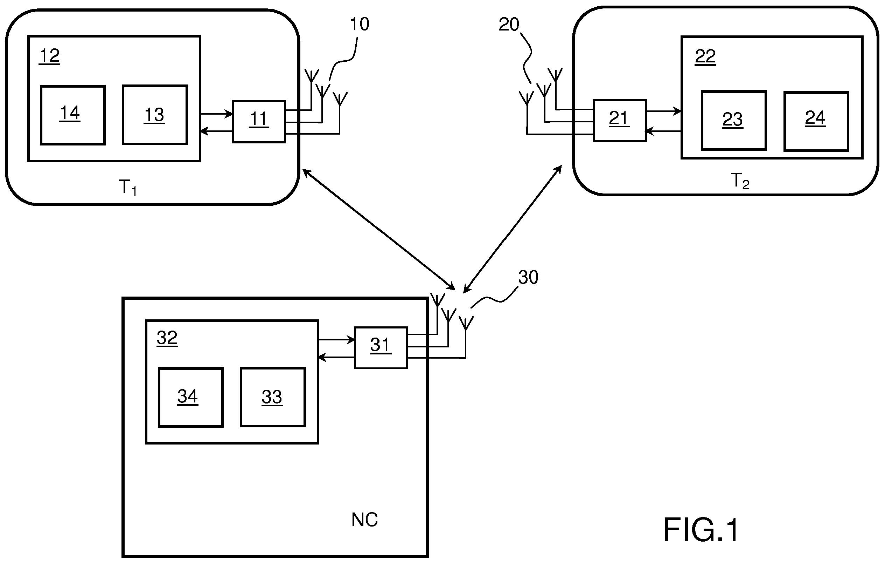

La figure 1 illustre un exemple de système selon l'invention comprenant un nœud central NC et deux utilisateurs $T_1$, $T_2$.

Un utilisateur $T_1$, $T_2$ comprend un réseau antennaire 10, 20 de $K_u$ antennes, chaque réseau d'antennes est relié à un système d'émission/réception 11, 21, permettant en réception d'échantillonner les signaux reçus et de les passer en bande de base, et en émission de transposer le signal numérique à émettre. Ce système est connu de l'homme du métier et est basé par exemple sur des récepteurs analogiques, permettant la transposition du signal reçu en fréquence intermédiaire ; des émetteurs analogiques, permettant la transposition du signal à émettre à la fréquence d'émission, des convertisseurs DUC/DDC (Digital Up-Converter, Digital Down-Converter) et des convertisseurs analogique/numérique ou numérique/analogique CAN/CNA. Le système d'émission/réception est relié à un dispositif de traitement tel qu'un processeur de traitement de signal et/ou un circuit programmable FPGA (Field Programmable Gate Array) 12, 22 permettant de mettre en œuvre les différents traitements du procédé selon l'invention pour chaque utilisateur. Le dispositif de traitement comprend un module de précodage 13, 23 (filtre numérique à l'émission) ayant pour fonction de déterminer les coefficients à utiliser au niveau de l'émission et un module de postcodage 14, 24 (filtre numérique à la réception) ayant pour fonction de déterminer les coefficients à utiliser au niveau de la réception. Les antennes peuvent être des antennes réalisant la fonction d'émission/réception. Le réseau antennaire peut aussi comporter des antennes émission 10e, 20e et des antennes réception 10r, 20r, séparées et non représentées pour des raisons de simplification.

Le nœud central NC comprend un réseau antennaire 30 relié à un système d'émission/réception 31 connu par l'homme du métier et adapté en réception à échantillonner les signaux reçus et à les passer en bande de base, et en émission à transposer le signal numérique à émettre. Ce système est connu de l'homme du métier. Il est basé par exemple sur des récepteurs analogiques, permettant la transposition du signal reçu en fréquence intermédiaire, des émetteurs analogiques, permettant la transposition du signal à émettre à la fréquence d'émission, des convertisseurs DUC/DDC (Digital Up-Converter, Digital Down-Converter) et des convertisseurs analogique/numérique ou numérique/analogique CAN/CNA. Le système d'émission/réception est relié à un dispositif de traitement 32 tel qu'un processeur de traitement de signal et/ou un FPGA permettant de mettre en œuvre les différents traitements du procédé selon l'invention pour le nœud central. Le dispositif de traitement comprend un module de précodage 33 (filtre numérique à l'émission) ayant pour fonction de déterminer les coefficients à utiliser au niveau de l'émission et un module de postcodage 34 (filtre numérique à la réception) ayant pour fonction de déterminer les coefficients à utiliser au niveau de la réception. Le réseau antennaire du nœud central peut aussi comporter des antennes émission et des antennes réception séparées et non représentées pour des raisons de simplification.

Un processeur comprend plusieurs fonctionnalités, dont notamment une fonction de synchronisation qui permet une émission synchronisée des signaux par les différents utilisateurs. Le système d'émission/réception permet également l'émission et la réception synchronisées des utilisateurs. En particulier, les oscillateurs locaux OLs sont distribués sur les différentes voies d'émission/réception. Ces éléments sont bien connus de l'homme du métier et ne seront pas détaillés.

Dans la suite de la description, les notations suivantes sont utilisées :

- Le nombre d'antennes à l'émission $K_e = K_c$ et le nombre d'antennes à la réception $K_r = K_u$ pour le lien descendant, du nœud central vers un utilisateur,
- Le nombre d'antennes à l'émission $K_e = K_u$ et le nombre d'antennes à la réception $K_r = K_c$ pour le lien montant, d'un utilisateur vers un nœud central.

Pour déterminer les signaux à émettre sur le lien descendant DL, on a $K_e$ antennes d'émission correspondant aux $K_c$ antennes du nœud central NC et $K_r$ antennes de réception correspondant aux $K_u$ antennes de chacun des utilisateurs $T_1$, $T_2$, dans l'exemple on considère que les utilisateurs ont un même nombre d'antennes.

L'exemple détaillé qui suit explicite le calcul des coefficients des filtres à appliquer à l'émission et à la réception de signaux dans le cas d'un réseau de communication comprenant deux utilisateurs $T_1$, $T_2$, un nœud central NC et avec les hypothèses et les notations suivantes :

- Sens descendant DL : un émetteur nœud central NC émet vers deux utilisateurs $T_1$ et $T_2$,
- $K_e$ antennes d'émission (au niveau du nœud central $K_e=K_c$) et $K_r$ antennes de réception (pour chaque utilisateur $(K_r=K_u)$,
- Signaux émis : $s_i(n)$ signal émis par le nœud central NC vers l'utilisateur $T_i$, avec $i$ = 1 et 2 et $E[|s_i(n)|^2] = 1$, i est l'indice d'un utilisateur, $n$ est l'indice de l'échantillon de signal émis, $E[\ ]$, l'espérance mathématique,
- étape de précodage $v_i$, vecteur de taille $K_e$, pour $i$ = 1 et 2, $v_i$ désigne le filtre utilisé par le nœud central NC pour l'émission des signaux vers l'utilisateur $T_i$, le coefficient de ce filtre d'émission correspondant à l'antenne k est noté $v_{i,k}$ avec k=1,..., $K_e$,
- $v_i^H v_i = 1$, normalisation de la puissance totale émise pour chaque utilisateur $T_i$, $^H$ correspond au transposé conjugué,
- Canal de propagation : $H_i$ est la matrice canal de propagation émission Tx vers réception Rx, de l'utilisateur $T_i$, pour $i$ = 1 et 2, de taille $K_r x K_e$. Le canal intègre l'information de la puissance des émetteurs,
- $b_i(n)$ : bruit multivoies de réception, de taille $K_r x1$, reçu sur le réseau de l'utilisateur $T_i$,
- Le signal multi antennes (multivoies) reçu sur les deux réseaux d'antennes de chaque utilisateur $T_1$, $T_2$, s'exprime respectivement de la manière suivante :

$$\begin{cases} x_1(n) = H_1 v_1 s_1(n) + H_1 v_2 s_2(n) + b_1(n) \ pour \ l'utilisateur \ T_1 \\ x_2(n) = H_2 v_1 s_1(n) + H_2 v_2 s_2(n) + b_2(n) \ pour \ l'utilisateur \ T_2 \end{cases} \quad (1)$$

On note :

$$h_1 = H_1 v_1, \ h_2 = H_1 v_2, \ h'_1 = H_2 v_1, \ h'_2 = H_2 v_2 \quad (2)$$

les différents vecteurs canaux, de taille $K_r x1$, des deux utilisateurs sur chacun des réseaux associés aux deux utilisateurs :

∘ $h_1$ (respectivement $h_2$): vecteur canal global du signal émis vers l'utilisateur $T_1$ (respectivement $T_2$) et reçu sur le réseau d'antennes associé à l'utilisateur $T_1$,

∘ $h'_1$ (respectivement $h'_2$). vecteur canal global du signal émis vers l'utilisateur $T_1$ (respectivement $T_2$) et reçu sur le réseau d'antennes associé à l'utilisateur $T_2$.

L'expression du signal utile reçu sur le réseau d'antennes des deux utilisateurs s'écrit respectivement :

$$\begin{cases} x_1(n) = h_1 s_1(n) + h_2 s_2(n) + b_1(n) \\ x_2(n) = h'_1 s_1(n) + h'_2 s_2(n) + b_2(n) \end{cases} \tag{3}$$

Le procédé va chercher à optimiser globalement la réception du signal utile sur chacun des réseaux antennaires des utilisateurs: le signal utile $s_1(n)$ sur le réseau d'antennes de l'utilisateur $T_1$ et le signal utile $s_2(n)$ sur le réseau d'antennes de l'utilisateur $T_2$.

Le traitement réalisé par le procédé selon l'invention consiste notamment à filtrer à l'émission (étape de précodage) les deux signaux $s_1(n)$ et $s_2(n)$ par les deux filtres émission $v_i$ (respectivement $v_1$, $v_2$), au niveau du nœud central NC, et à filtrer à la réception (étape de postcodage), au niveau de chaque utilisateur $T_1, T_2$, les signaux reçus sur chaque réseau antennaire par deux filtres spatiaux ou vecteurs notés $w_i$, ( $w^*_1$, $w^*_2$ ) pour chaque utilisateur $T_i$ avec i= 1 et 2. Les filtres $v_i$ et $w^*_i$ utilisés respectivement à l'émission et à la réception sont calculés de façon notamment à optimiser, sous certaines contraintes décrites ci-après, la valeur du rapport signal à bruit ou SINR en sortie de traitement pour chaque utilisateur. En sortie de traitement par les filtres de réception $w^*_i$, le signal $y_i(n)$ reçu s'écrit pour chaque utilisateur $i$ = 1 et 2 :

$$y_i(n) = \sum_{k=1}^{K_r} w_{i,k}{}^* x_{i,k}(n) = w_i{}^H x_i(n) \tag{4}$$

La lettre $^H$ en exposant correspond au transposé conjugué.

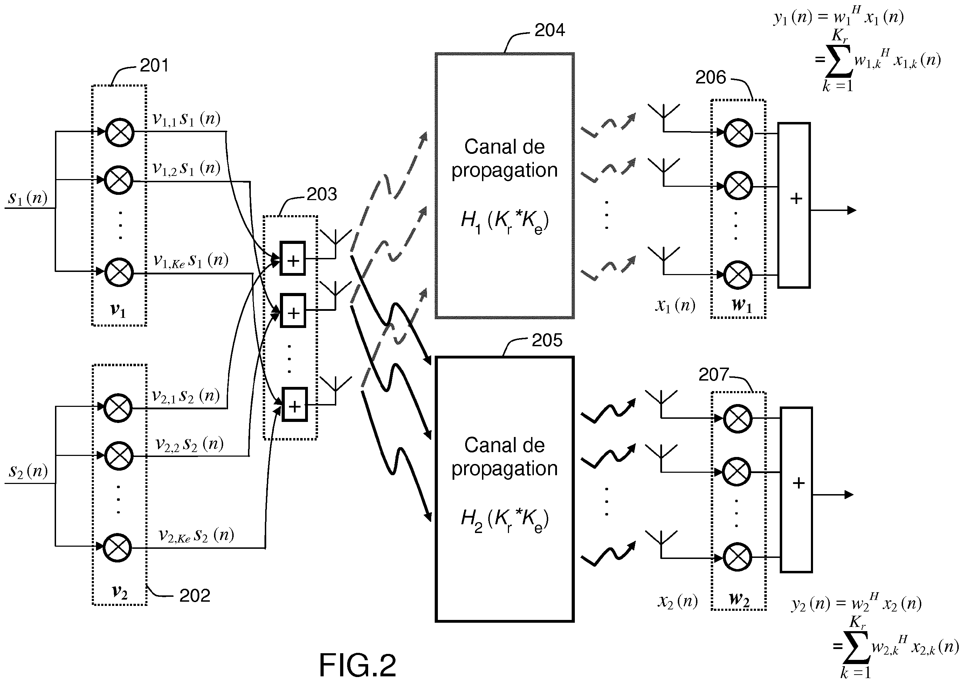

La figure 2 schématise les traitements effectués pour le cas de la liaison descendante DL :

∘ les signaux $s_1(n)$ et $s_2(n)$ à émettre vers les deux utilisateurs $T_1$ et $T_2$ sont filtrés par les filtres d'émission $v_1$ (201) et $v_2$ (202), puis sommés numériquement (203) avant d'être émis sur le réseau d'antennes du nœud central NC,

∘ le signal est transmis à travers le canal de propagation (204, 205) vers chacun des deux utilisateurs $T_1$ et $T_2$.

Après passage dans le canal de propagation, les signaux reçus par chaque utilisateur $T_1$ et $T_2$, $x_1(n)$ et $x_2(n)$, sont filtrés en réception par chaque utilisateur (206, 207) par les filtres $w^*_i$ pour obtenir les signaux $y_1(n)$ et $y_2(n)$, suivant la formule (4) ci-dessus. Les signaux sont ensuite traités par les traitements connus de l'homme de l'art (désentrelacement, décodage, etc) pour obtenir l'information utile.

L'idée mise en œuvre dans le procédé selon l'invention consiste notamment, pour chaque utilisateur $T_i$, à choisir le filtre d'émission $v_i$ qui va permettre de maximiser l'énergie émise vers l'utilisateur $T_i$ considéré, tout en minimisant l'impact du signal ainsi émis pour la réception du ou des autres utilisateurs. Pour cela, le procédé va chercher à ce que, sur chaque réseau de réception, les deux vecteurs canaux associés aux deux utilisateurs soient orthogonaux. De cette façon, un utilisateur qui émet ne va pas ou peu perturber la réception du signal attendu par un autre utilisateur. Le procédé selon l'invention optimise également un critère basé sur le SINR (Signal to Interference plus Noise Ratio) pour chacun des deux utilisateurs. Un critère de SINR peut être de maximiser le SNIR minimal associé à chaque utilisateur ou de maximiser la somme des SINR, ou de maximiser la somme des $\log_2(1+\text{SINR})$ (ce qui correspond à maximiser le débit total).

Le procédé selon l'invention impose donc la contrainte de faire en sorte que les vecteurs canaux associés aux deux utilisateurs $T_1$, $T_2$ soient orthogonaux sur chaque réseau de réception, ce qui se traduit par le système suivant de deux équations :

$$\begin{cases} \boldsymbol{h}_1^H \boldsymbol{h}_2 = 0 \\ \boldsymbol{h'}_1^H \boldsymbol{h'}_2 = 0 \end{cases} \tag{5}$$

Les filtres de réception $\boldsymbol{w}_1$ et $\boldsymbol{w}_2$ qui optimisent la réception sont alors égaux respectivement à $\boldsymbol{h}_1$ et $\boldsymbol{h'}_2$ : le SINR, par exemple, est optimisé, et l'interférence provenant de l'autre utilisateur est naturellement éliminée. Afin d'améliorer les performances en présence des différentes sources de dégradation inhérentes au système (erreur d'estimation des matrices de canal, non stationnarité du canal de propagation, présence d'interférences, etc), il est possible d'effectuer la réception par les utilisateurs $T_1$ et $T_2$ à l'aide d'un algorithme de réception entrée unique, sorties multiples ou SIMO (Single Input Multiple Output) connu de l'homme du métier, comportant éventuellement de l'antibrouillage, et/ou une égalisation du signal. Comme algorithme de réception SIMO, il est possible d'utiliser l'algorithme décrit dans le brevet du demandeur US6243415. L'utilisation d'un algorithme comportant de l'antibrouillage peut se révéler intéressant car il permet notamment d'optimiser les performances. La présente invention porte en particulier sur la procédure de calcul des pondérations d'émission, qui est indépendante de la procédure mise en œuvre à la réception par chaque utilisateur.

Dans ce système d'équations, les inconnues sont les vecteurs de pondération émission $\boldsymbol{v}_i$, pour $i = 1$ et 2 (cf équation (2) montrant le lien entre les vecteurs $\boldsymbol{h}_i$ et $\boldsymbol{h'}_i$ de l'équation (5) et les vecteurs $\boldsymbol{v}_i$). Chacun de ces vecteurs comportant $K_e$ composantes égales aux $K_e$ antennes d'émission, il y a donc $2 K_e$ inconnues. L'une des caractéristiques de l'invention, en plus des contraintes d'orthogonalité des vecteurs canaux, est d'imposer aux vecteurs de pondération à l'émission $\boldsymbol{v}_i$ d'appartenir à un espace de dimension deux, égal au nombre d'équations du système. Pour déterminer les coefficients des filtres (vecteurs de pondération à l'émission) à utiliser pour l'émission des signaux, le procédé effectue une décomposition en valeurs singulières SVD (Singular Value Décomposition) des matrices de canal $H_i$ associées à chaque utilisateur $T_i$, dans l'exemple donné $T_1$ et $T_2$:

$$H_i = U_i \Sigma_i V_i^H \tag{6}$$

où :

- $U_i$ est une matrice unitaire de taille $K_r \times K_r$
- $V_i$ est une matrice unitaire de taille $K_e \times K_e$
- $\Sigma_i$ est une matrice de taille $K_r \times K_e$ comportant des éléments non nuls $\sigma_{ij}$, $j = 1, ..., \min(K_r, K_e)$, sur sa « diagonale ». Dans le cas où $K_r < K_e$, la matrice s'écrit:

$$\Sigma_i = \begin{bmatrix} \sigma_{i1} & \cdots & 0 & 0 \\ \vdots & \ddots & \vdots & \vdots \\ 0 & \cdots & \sigma_{iK_r} & 0 \end{bmatrix} \tag{7}$$

Le calcul des vecteurs $\boldsymbol{v}_1$ et $\boldsymbol{v}_2$ est effectué en les recherchant comme une combinaison linéaire des vecteurs associés aux deux plus grandes valeurs propres de la décomposition en valeurs singulières SVD, où $\alpha$ et $\lambda$ sont deux variables complexes :

$$\boldsymbol{v}_1 = \frac{\boldsymbol{v}_{11} + \alpha^* \boldsymbol{v}_{12}}{\sqrt{1 + |\alpha|^2}}$$
$$\boldsymbol{v}_2 = \frac{\boldsymbol{v}_{21} + \lambda \boldsymbol{v}_{22}}{\sqrt{1 + |\lambda|^2}} \tag{8}$$

La résolution du système d'équation (5) conduit à la solution suivante : $\alpha$ est solution d'une équation du second degré :

$$a\, \alpha^2 + b\, \alpha + c = 0 \tag{9}$$

avec :

$$\begin{cases} a = \sigma_{12}^2(\sigma_{21}^2 - \sigma_{22}^2)\boldsymbol{v}_{12}^H\boldsymbol{v}_{21}\boldsymbol{v}_{12}^H\boldsymbol{v}_{22} \\ b = (\sigma_{12}^2\sigma_{21}^2 - \sigma_{22}^2\sigma_{11}^2)\boldsymbol{v}_{11}^H\boldsymbol{v}_{21}\boldsymbol{v}_{12}^H\boldsymbol{v}_{22} + (\sigma_{21}^2\sigma_{11}^2 - \sigma_{12}^2\sigma_{22}^2)\boldsymbol{v}_{12}^H\boldsymbol{v}_{21}\boldsymbol{v}_{11}^H\boldsymbol{v}_{22} \\ c = \sigma_{11}^2(\sigma_{21}^2 - \sigma_{22}^2)\boldsymbol{v}_{11}^H\boldsymbol{v}_{21}\boldsymbol{v}_{11}^H\boldsymbol{v}_{22} \end{cases} \quad (10)$$

Cette équation comporte deux solutions. Pour chacune de ces deux solutions, la valeur de $\lambda$ associée est calculée par la formule suivante :

$$\lambda = -\frac{\alpha\,\sigma_{12}^2\,\boldsymbol{v}_{12}^H\boldsymbol{v}_{21} + \sigma_{11}^2\,\boldsymbol{v}_{11}^H\boldsymbol{v}_{21}}{\alpha\,\sigma_{12}^2\,\boldsymbol{v}_{12}^H\boldsymbol{v}_{22} + \sigma_{11}^2\,\boldsymbol{v}_{11}^H\boldsymbol{v}_{22}} \quad (11)$$

Le SINR obtenu pour chaque utilisateur s'exprime à partir des formules suivantes :

$$\begin{cases} SNIR_1 = \dfrac{\sigma_{11}^2 + \sigma_{12}^2|\alpha|^2}{1 + |\alpha|^2} \\[2mm] SNIR_2 = \dfrac{\sigma_{21}^2 + \sigma_{22}^2|\lambda|^2}{1 + |\lambda|^2} \end{cases} \quad (12)$$

On choisit, par exemple, le couple $(\alpha,\lambda)$ qui conduit au maximum de la valeur minimale du SINR des deux utilisateurs. Les vecteurs pondérations en émission $\boldsymbol{v}_1$ et $\boldsymbol{v}_2$ sont ensuite obtenus à partir du couple $(\alpha,\lambda)$ sélectionné et en utilisant la formule (8).

Les valeurs des filtres ou vecteurs en émission $\boldsymbol{v}_1$ et $\boldsymbol{v}_2$ sont ensuite utilisées respectivement pour faire une formation de faisceau en émission pour les signaux utiles $s_1(n)$ et $s_2(n)$ à destination des deux utilisateurs, tel qu'il est illustré à la figure 2.

Selon une variante de réalisation et afin d'optimiser les performances du procédé, lorsque le nombre d'antennes à l'émission $K_e$ est strictement supérieur à deux, il est possible d'itérer les étapes du procédé en recherchant les vecteurs $\boldsymbol{v}_1(j)$ et $\boldsymbol{v}_2(j')$ formés à partir des vecteurs propres $\boldsymbol{v}_{11}$ et $\boldsymbol{v}_{21}$ associés à la valeur propre maximale des SVD associées aux deux matrices de canal et des vecteurs propres $v_{1j}$ et $v_{2j'}$ :

$$\begin{cases} \boldsymbol{v}_1(j) = \dfrac{\boldsymbol{v}_{11} + \alpha(j)^*\,\boldsymbol{v}_{1j}}{\sqrt{1 + |\alpha(j)|^2}} \\[3mm] \boldsymbol{v}_2(j') = \dfrac{\boldsymbol{v}_{21} + \lambda(j')\,\boldsymbol{v}_{2j'}}{\sqrt{1 + |\lambda(j')|^2}} \end{cases} \quad (13)$$

où j et j' sont compris entre deux et $K_e$. Pour chaque couple (j,j'), on choisit le couple $(\alpha(j),\lambda(j'))$ conduisant, par exemple, au maximum du SINR minimal obtenu sur les deux utilisateurs. En notant SINR(j,j') la valeur du SINR minimal ainsi obtenue pour le couple (j,j'), on choisit le couple (j,j') conduisant, par exemple, au maximum de SINR(j,j'). Les pondérations en émission $\boldsymbol{v}_1$ et $\boldsymbol{v}_2$ sont obtenues avec l'équation (13) à partir du couple (j,j') ainsi sélectionné et du couple $(\alpha(j),\lambda(j'))$ associé. Ces valeurs pour les filtres en émission sont ensuite utilisées pour la formation de faisceau, formation des signaux utiles à émettre vers chaque utilisateur.

Les exemples pour choisir le couple (j,j') à utiliser pour la formation de faisceaux à l'émission exposés ci-dessus ont été donnés à titre d'exemple non limitatif. Sans sortir du cadre de l'invention, on pourrait aussi choisir comme critère (pour déterminer les coefficients à utiliser pour les filtres) de maximiser la somme des SINR, ou tout autre critère basé sur le calcul des SINR (comme par exemple le débit total, qui correspond à la somme des $\log_2(1+\text{SINR})$), et de choisir le couple de valeurs (j,j') correspondant.

Dans le cas où le canal de propagation est de rang un, toutes les valeurs propres $\sigma_{ij}$ sont nulles pour $j \geq 2$. Dans ce cas particulier, l'équation donnant $\alpha$ est une équation du $1^{er}$ degré et il n'y a qu'un couple $(\alpha,\lambda)$ solution, qui s'exprime de la façon suivante :

$$\left( \quad \alpha = -\frac{v_{11}^H v_{21}}{v_{12}^H v_{21}} \quad ; \quad \lambda = -\frac{v_{11}^H v_{21}}{v_{11}^H v_{22}} \quad \right) \qquad (14)$$

et les SINR associés s'écrivent :

$$\begin{cases} SNIR_1 = \dfrac{\sigma_{11}^2}{1 + \left|\dfrac{v_{11}^H v_{21}}{v_{12}^H v_{21}}\right|^2} \\[2em] SNIR_2 = \dfrac{\sigma_{21}^2}{1 + \left|\dfrac{v_{11}^H v_{21}}{v_{11}^H v_{22}}\right|^2} \end{cases} \qquad (15)$$

Afin d'améliorer les performances du procédé lorsque le canal est de rang un, il est possible d'effectuer, comme dans le cas général, la recherche sur tous les vecteurs combinaisons linéaire du premier vecteur propre associé aux deux matrices de canal $H_1$, $H_2$ et des autres vecteurs propres (qui sont tous associés à une valeur propre nulle dans la décomposition en valeurs singulières des deux matrices de canal).

A partir de l'équation (15) appliquée à $v_{1j}$ à la place de $v_{12}$ pour $SNIR_1$ et à $v_{2j}$, à la place de $v_{22}$ pour $SNIR_2$, on constate que cette optimisation conduit à trouver les vecteurs propres $v_{1j}$ et $v_{2j}$, maximisant respectivement $\left|v_{1j}^H v_{21}\right|$ et $\left|v_{11}^H v_{2j'}\right|$ et à calculer les filtres de précodage correspondants par la formule (13).

Dans le sens montant (Up Link : UL), où deux utilisateurs $T_1$ et $T_2$ émettent vers un émetteur nœud central NC, on utilise les hypothèses et les notations suivantes, en utilisant la notation 'ul' en indice pour différencier les variables utilisées en liaison montante UL et en liaison descendante DL :

- $K_e$ antennes d'émission (pour chaque utilisateur $K_e = K_u$) et $K_r$ antennes de réception (au niveau du nœud central $K_r = K_c$),
- Signaux émis : $s_{ul,i}(n)$ signal émis par l'utilisateur $T_i$ vers le nœud central NC, avec $i = 1$ et 2 avec $E[|s_{ul,i}(n)|^2] = 1$, i est l'indice d'un utilisateur, n est l'indice de l'échantillon de signal émis,
- $v_{ul,i}$, vecteur de taille $K_e$, pour $i = 1$ et 2, $v_i$ désigne le filtre de précodage utilisé par l'utilisateur $T_i$ pour l'émission des signaux vers le nœud central NC, le coefficient de ce filtre correspondant à l'antenne k est noté $v_{ul,i,k}$ avec $k=1,..., K_e$,
- Expression du signal multivoies reçu sur le réseau de capteurs du nœud central :

$$x(n) = H_{ul,1} v_{ul,1} s_{ul,1}(n) + H_{ul,2} v_{ul,2} s_{ul,2}(n) + b(n) \qquad (16)$$

On note : $h_{ul,1} = H_{ul,1} v_{ul,1}$, $h_{ul,2} = H_{ul,2} v_{ul,2}$.

Dans le sens montant UL, contrairement au sens descendant DL, chaque utilisateur $T_i$ parvient au réseau de réception du nœud central avec son propre canal $H_i$ et il n'y a qu'un seul réseau de réception (le nœud central NC).

L'équation précédente s'écrit :

$$x(n) = h_{ul,1} s_{ul,1}(n) + h_{ul,2} s_{ul,2}(n) + b(n) \qquad (17)$$

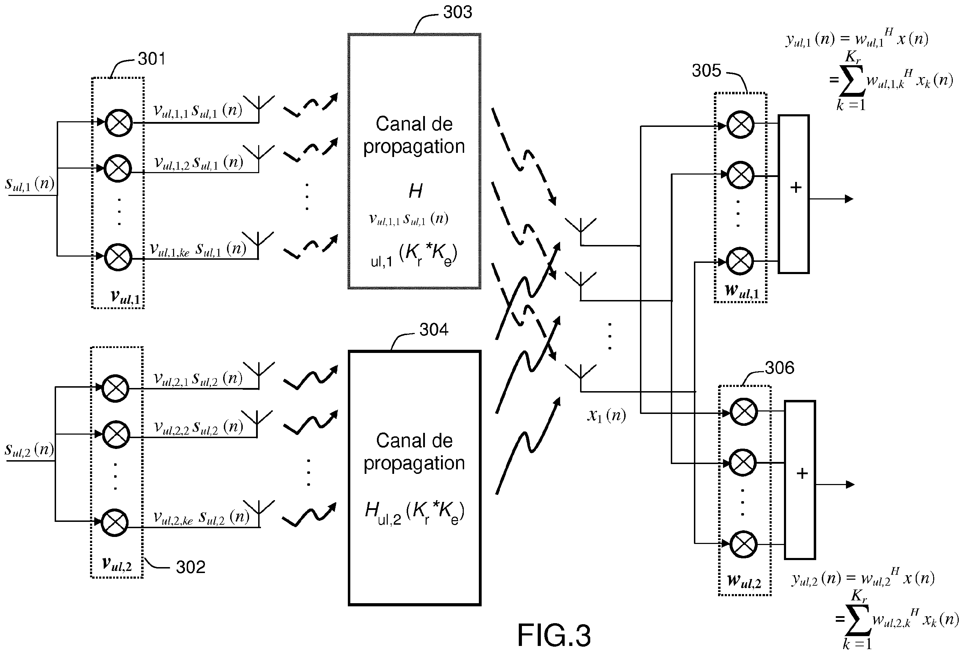

La figure 3 schématise les traitements effectués pour le cas de la liaison montante UL :

○ les signaux $s_{ul,1}(n)$ et $s_{ul,2}(n)$ à émettre par chacun des deux utilisateurs $T_1$ et $T_2$ vers le nœud central sont filtrés par les filtres d'émission associés $v_{ul,1}$ 301 et $v_{ul,2}$ 302,
○ les signaux sont transmis à travers le canal propagation 303, 304 vers le nœud central NC,

◦ après passage dans le canal de propagation, le signal reçu x(n) par le nœud central NC est filtré en réception par les filtres $w^{*}_{ul,1}$ 305 et $w^{*}_{ul,2}$ 306 pour obtenir respectivement les signaux $y_{ul,1}(n)$ et $y_{ul,2}(n)$ qui sont ensuite traités par les traitements connus de l'homme de l'art (désentrelacement, décodage, etc) pour obtenir l'information utile émise par chaque utilisateur, avec

$$y_{ul,i}(n) = \sum_{k=1}^{K_r} w_{ul,i,k}^{*} x_k(n) = \boldsymbol{w_{ul,i}}^{H} \boldsymbol{x}(n) \text{ pour } i = 1,2.$$

Pour optimiser la réception des deux utilisateurs au niveau du nœud central NC, on choisit, comme dans le cas DL, d'annuler $\boldsymbol{h}^{H}_{\boldsymbol{ul,1}}\boldsymbol{h_{ul,2}} = \boldsymbol{v}^{H}_{\boldsymbol{ul,1}}H^{H}_{ul,1}H_{ul,2}\boldsymbol{v_{ul,2}}$, ce qui, contrairement au cas DL, conduit à une seule équation (au lieu de deux), qui s'exprime, à partir de la décomposition SVD de $H_{ul,1}$ et $H_{ul,2}$ :

$$\boldsymbol{h}^{H}_{\boldsymbol{ul,1}}\boldsymbol{h_{ul,2}} = \boldsymbol{v}^{H}_{\boldsymbol{ul,1}}V_{ul,1}\,\Sigma_{ul,1}{}^{H}U_{ul,1}{}^{H}U_{ul,2}\Sigma_{ul,2}\,V_{ul,2}{}^{H}\boldsymbol{v_{ul,2}} = 0 \qquad (18)$$

De la même façon que dans le cas descendant DL, et en utilisant les mêmes notations, les pondérations émission $\boldsymbol{v_{ul,1}}$ et $\boldsymbol{v_{ul,2}}$ solutions de l'équation (18) sont recherchées dans l'espace engendré par les deux premiers vecteurs propres issus des décompositions en valeurs singulières SVD effectuées sur les matrices de canal $H_{ul,1}$ et $H_{ul,2}$ :

$$\boldsymbol{v_{ul,1}} = \frac{\boldsymbol{v_{ul,11}} + \alpha^{*}\boldsymbol{v_{ul,12}}}{\sqrt{1 + |\alpha|^2}}$$
$$\boldsymbol{v_{ul,2}} = \frac{\boldsymbol{v_{ul,21}} + \lambda\,\boldsymbol{v_{ul,22}}}{\sqrt{1 + |\lambda|^2}} \qquad (19)$$

Après quelques calculs, on peut montrer que le couple $(\alpha,\lambda)$ est solution de l'équation suivante :

$$(A + \lambda B) + \alpha(C + \lambda D) = 0 \qquad (20)$$

avec :

$$\begin{cases} A = \sigma_{ul,11}\sigma_{ul,21}\boldsymbol{u}^{H}_{\boldsymbol{ul,11}}\boldsymbol{u_{ul,21}} \\ B = \sigma_{ul,11}\sigma_{ul,22}\boldsymbol{u}^{H}_{\boldsymbol{ul,11}}\boldsymbol{u_{ul,22}} \\ C = \sigma_{ul,12}\sigma_{ul,21}\boldsymbol{u}^{H}_{\boldsymbol{ul,12}}\boldsymbol{u_{ul,21}} \\ D = \sigma_{ul,12}\sigma_{ul,22}\boldsymbol{u}^{H}_{\boldsymbol{ul,12}}\boldsymbol{u_{ul,22}} \end{cases} \qquad (21)$$

Les SNIR associés s'écrivent de la même façon que dans le cas DL:

$$\begin{cases} SNIR_1 = \dfrac{\sigma^2_{ul,11} + \sigma^2_{ul,12}|\alpha|^2}{1 + |\alpha|^2} \\ SNIR_2 = \dfrac{\sigma^2_{ul,21} + \sigma^2_{ul,22}|\lambda|^2}{1 + |\lambda|^2} \end{cases} \qquad (22)$$

Plusieurs possibilités sont utilisables dans le cadre de l'invention pour déterminer le couple $(\alpha,\lambda)$ solution de l'équation (18) et permettant d'optimiser un critère basé sur les SNIR associés aux deux utilisateurs (ce critère est du même type que dans le cas DL).
Comme dans le cas de la liaison descendante DL, lorsque le nombre d'antennes d'émission est strictement supérieur à deux, il est possible d'itérer le procédé en recherchant les vecteurs $v_{ul,1}(j)$ et $v_{ul,2}(j')$ formés à partir des différents vecteurs propres associés aux deux matrices de canal suivant la formule (13) adaptée au cas UL et on choisit le couple $(j,j')$ conduisant à l'optimisation du critère de SNIR, où $j$ et $j'$ sont compris entre deux et $K_e$.

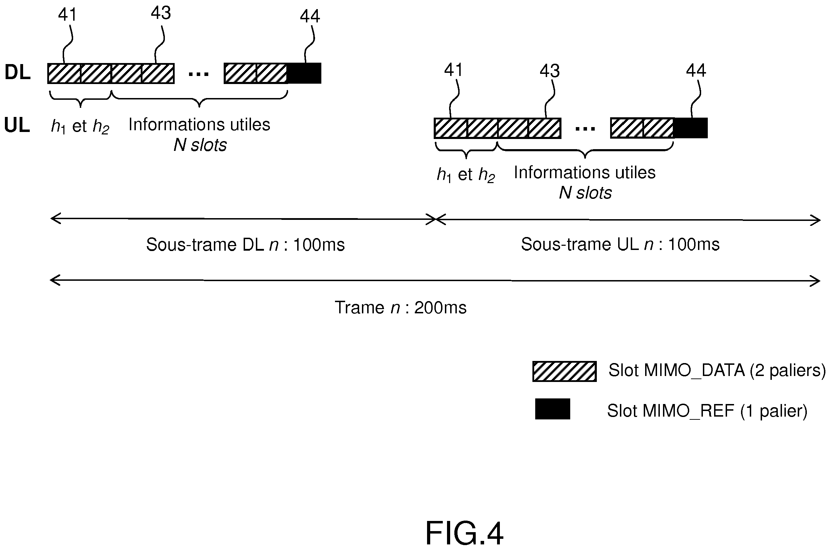

Pour la mise en œuvre du procédé selon l'invention, une solution illustrée à la figure 4, consiste à utiliser pour transmettre les données, une trame comprenant au moins deux types de slots : les slots MIMO_DATA et les slots MIMO_REF. La figure 4 donne un exemple de format de trame utilisé dans le procédé selon l'invention.

Chaque trame n de 200 ms, par exemple, est composée d'une sous-trame DL de 100 ms, pour le lien entre le NC et les deux utilisateurs $T_1$ et $T_2$, et d'une sous-trame UL de 100 ms, pour le lien entre les deux utilisateurs $T_1$ et $T_2$ et le nœud central NC.

Chaque sous-trame est composée, par exemple :

- D'un slot MIMO_DATA à deux paliers par exemple, permettant de transmettre les coefficients des deux matrices de canal qui ont été estimées lors de la trame précédente sur un slot MIMO_REF, 41, pour chaque sens de liaison,
- De $N$ slots MIMO_DATA permettant de transmettre l'information utile, 43,
- D'un slot MIMO_REF, 44 par exemple formé d'un palier et permettant l'estimation des matrices de canal dans les deux sens de la liaison (montant et descendant). Il est à noter que les antennes d'émission et de réception peuvent être différentes : les matrices de canal doivent donc être estimées pour chaque sens de la liaison.

La trame dure T ms. La matrice de canal estimée à l'instant $t$ est donc utilisée moins de T ms plus tard. Le principe suppose donc une bonne stationnarité du canal sur cette durée. Afin de réduire la durée entre l'estimation de la matrice de canal sur la trame $n$ et son exploitation pour l'émission des slots MIMO_DATA de la trame $n+1$, le slot MIMO_REF peut être avantageusement émis à la fin de chaque sous-trame.

Le slot MIMO_REF est formé d'un palier, sur lequel chaque antenne d'émission émet sa propre séquence d'apprentissage. Ces séquences d'apprentissage peuvent être avantageusement obtenues à partir de shifts cycliques effectués sur une séquence Cazac $d(n)$ de longueur N [tel que décrit dans la publication de X. Hou and H. Kayama, "Démodulation Reference Signal Design and Channel Estimation for LTE-Advanced Uplink", Advances in Vehicular Networking Technologies, Dr Miguel Almeida (Ed.), InTech, 2011], ou par tout autre procédé connu de l'homme du métier permettant d'émettre simultanément des séquences d'apprentissage sur les différentes antennes d'émission afin d'estimer la matrice de canal de propagation associée (par exemple, pour une forme d'onde parallèle, on peut émettre sur chaque antenne d'émission des pilotes situés sur des fréquences différentes et une interpolation est effectuée à la réception pour estimer le canal associé à chaque antenne d'émission) :

◦ dans le sens descendant DL, la séquence d'apprentissage $d_k(n)$, pour n = 1,...,$N$ émise sur l'antenne k = 1, ... $K_e$, est obtenue à partir de cette séquence Cazac, avec un shift cyclique de valeur (k-1) N/Ke :

◦

$$d_k(n) = d\left(\left(n + \frac{k-1}{K_e}N\right) modulo\ N\right)$$

◦ dans le sens montant UL, la séquence d'apprentissage $d_{i,k}(n)$ émise sur l'antenne k = 1, ... $K_e$, de l'utilisateur $T_i$ est obtenue à partir de cette séquence Cazac, avec un shift cyclique de valeur [(k-1)+(i-1)*$K_e$)] N/(2.$K_e$) :

◦

$$d_{i,k}(n) = d\left(\left(n + \frac{k-1+(i-1)K_e}{2K_e}N\right) modulo\ N\right)$$

Ce procédé permet d'émettre des séquences orthogonales sur les différentes voies d'émission, ainsi que de faciliter l'estimation de canal. Il est utilisé dans les deux sens de la liaison montante, descendante.

Les slots MIMO_DATA comportent des blocs d'informations utiles et des blocs de séquence d'apprentissage. Une séquence d'apprentissage est associée à chaque utilisateur. Elle peut être avantageusement définie à partir d'une séquence Cazac, avec un décalage cyclique associé à chaque utilisateur dans les deux sens descendant DL et montant UL. Dans les deux sens de la liaison, les slots MIMO_DATA sont émis en utilisant les pondérations permettant la formation de faisceaux ou beamforming en émission :

∘ Signaux modulés à émettre pour chaque utilisateur $T_i$ : $s_i(n)$ pour $i$ = 1 et 2, et $n$ = 1, ..., $N_{DATA}$ où $N_{DATA}$ est le nombre d'échantillons à émettre sur un slot MIMO_DATA, comportant les blocs d'information utile et les blocs de séquence d'apprentissage,

∘ Signaux modulés à émettre pour chaque utilisateur $T_i$ sur chaque antenne $k$ = signal $s_i(n)$ avec pondération émission $v_{k,i}$ : $x_{k,i}(n) = v_{k,i} s_i(n)$ pour $i$ = 1 et 2 et $k$ = 1 à $K_e$, $v_{k,i}$ correspond à la composante k du vecteur $\boldsymbol{v}_i$,

∘ Les pondérations en émission sont calculées suivant un algorithme défini pour le sens descendant DL et un algorithme défini pour le sens montant UL,

∘ Chaque utilisateur $T_i$ a sa propre séquence d'apprentissage.

Remarques :

- Sens descendant DL :

  • Les signaux à émettre sur chaque antenne $k$ du réseau d'antenne du NC correspondent à la somme des signaux associés à chaque utilisateur : $x_k(n) = x_{k,1}(n) + x_{k,2}(n)$,

- Sens montant UL :

  • Les signaux à émettre par chaque utilisateur $i$ sur chaque antenne $k$ sont émis de façon indépendante et simultanée sur les réseaux d'antenne de $T_1$ et $T_2$ : $x_{k,i}(n)$.

Le principe de la solution utilisée, en boucle fermée, suppose a priori que la transmission est faite en fréquence fixe. Elle peut aussi être réalisée en évasion de fréquence (EVF) : les étapes du procédé décrites précédemment seront alors mises en œuvre de façon indépendante sur chaque fréquence de l'évasion de fréquence.

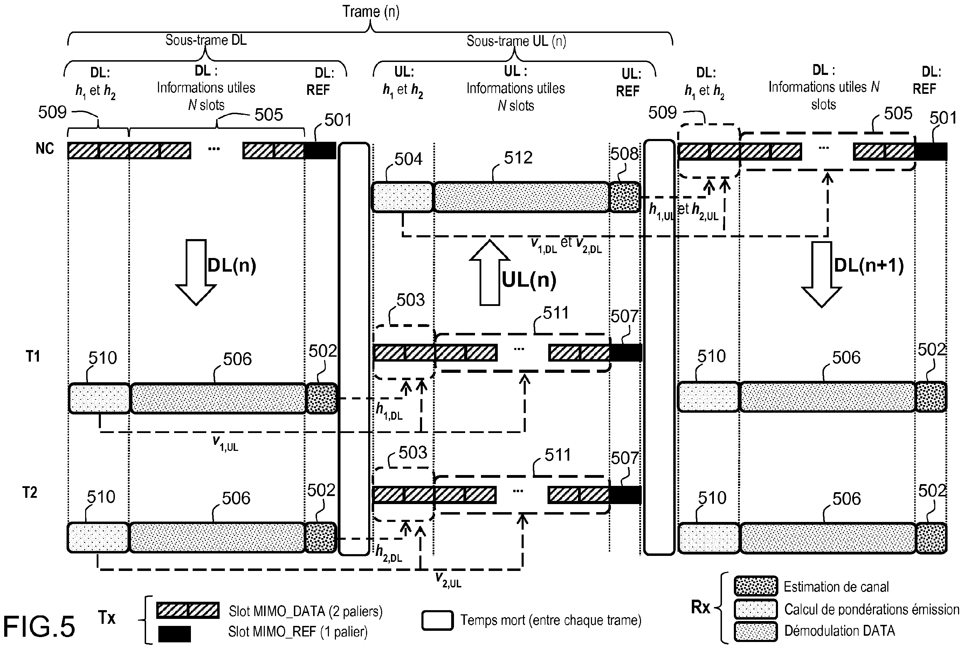

La figure 5 illustre le séquencement des étapes mises en œuvre par le procédé selon l'invention au niveau de chaque utilisateur et au niveau du nœud central.

Pour l'émission des données sur la liaison descendante, figure 5, le procédé selon l'invention fait intervenir les étapes suivantes:

∘ Etape 501 (sous-trame DL de la trame n) : émission d'un slot MIMO_REF par le nœud central NC sur chaque antenne d'émission, les signaux émis par le nœud central sont traités par le récepteur de chaque utilisateur lors de l'étape 502 ci-dessous,

∘ Etape 502 (sous-trame DL de la trame n) : Estimation des matrices de canal $H_1$ et $H_2$ par chaque utilisateur $T_1$ et $T_2$, suivant une technique connue de l'homme du métier,

∘ Etape 503 (sous-trame UL de la trame n) : envoi des matrices de canal estimées $\hat{H}_1$ et $\hat{H}_2$ par chaque utilisateur $T_1$ et $T_2$ au nœud central NC. Les matrices de canal sont envoyées sur la même ressource temps-fréquence par les deux utilisateurs, à l'aide d'un slot MIMO_DATA, en utilisant les pondérations émission calculées sur le slot précédent pour le sens UL lors de l'étape 510,

∘ Etape 504 (sous-trame UL de la trame n) : calcul des pondérations émission $v_i$ par le nœud central, à partir des matrices de canal estimées $\hat{H}_1$ et $\hat{H}_2$ par chaque utilisateur $T_1$ et $T_2$, selon les étapes décrites précédemment pour la voie descendante et en appliquant les formules (6) à (13),

∘ Etape 505 (sous-trame DL de la trame n+1) : émission des slots MIMO_DATA, contenant les données utiles à émettre par le nœud central NC à destination des deux utilisateurs. Le signal $s_i(n)$ ainsi formé des différents slots de données utiles est émis avec les pondérations émission $\boldsymbol{v}_i$ calculées à l'étape 504 : on obtient le signal $v_{1,k} s_1(n)$ + $v_{1,k} s_2(n)$ à émettre sur l'antenne d'émission $k$,

∘ Etape 506 (sous-trame DL de la trame n+1) : réception des données utiles par $T_1$ et $T_2$ à l'aide des vecteurs de pondération réception $\boldsymbol{w}_i$. Ces vecteurs $\boldsymbol{w}_i$ sont calculés à la réception par $T_1$ et $T_2$ à l'aide d'un algorithme de réception SIMO connu de l'homme du métier, comportant éventuellement de l'antibrouillage, et sont indépendants du calcul des pondérations d'émission. Comme algorithme de réception SIMO, il est possible d'utiliser l'algorithme décrit dans le brevet US6243415. L'utilisation d'un algorithme comportant de l'antibrouillage n'est pas strictement nécessaire dans la méthode mais il permet d'optimiser les performances.

Pour l'émission des données sur la liaison montante, figure 5, le procédé selon l'invention fait intervenir les étapes suivantes :

∘ Etape 507 (sous-trame UL de la trame n) : émission d'un slot MIMO_REF par chaque utilisateur $T_1$ et $T_2$ sur

chacune de ses antennes d'émission, les signaux émis par chaque utilisateur sont traités par le récepteur du nœud central lors de l'étape 508 ci-dessous,

∘ Etape 508 (sous-trame UL de la trame n) : Estimation par le NC des matrices de canal $H_{ul,1}$ et $H_{ul,2}$ associées à chaque utilisateur $T_1$ et $T_2$, suivant une technique connue de l'homme du métier,

∘ Etape 509 (sous-trame DL de la trame n+1) : envoi des matrices de canal $\hat{H}_{ul,1}$ et $\hat{H}_{ul,2}$ estimées par le nœud central NC à chaque utilisateur. Les matrices de canal sont envoyées sur un slot MIMO_DATA en utilisant les pondérations émission calculées sur le slot précédent pour le sens DL,

∘ Etape 510 (sous-trame DL de la trame n+1) : calcul des pondérations émission $v_{ul,i}$ par chaque utilisateur $T_1$ et $T_2$, à partir des matrices de canal $\hat{H}_{ul,1}$ et $\hat{H}_{ul,2}$ estimées par le nœud central NC, selon les étapes décrites précédemment pour la voie montante en appliquant les formules (19) à (22),

∘ Etape 511 (sous-trame UL de la trame n+1) : émission des N slots MIMO_DATA contenant les données utiles à émettre par chaque utilisateur à destination du nœud central NC. Les signaux $s_{ul,i}(n)$ ainsi formés des différents slots de données utiles sont émis à destination du nœud central NC avec les pondérations émission $v_{ul,i}$ calculées à l'étape 509 : on obtient le signal $v_{ul,i,k}\, s_{ul,i}(n)$ à émettre par l'utilisateur $i$ sur l'antenne $k$,

∘ Etape 512 (sous-trame UL de la trame n+1) : réception des données utiles associées à $U_1$ et $U_2$ par le NC à l'aide des vecteurs de pondération réception $w_{ul,i}$. Ces vecteurs $w_{ul,i}$ sont calculés à la réception par l'utilisateur $T_1$ et l'utilisateur $T_2$ à l'aide d'un algorithme de réception SIMO connu de l'homme du métier, comportant éventuellement de l'antibrouillage, mais ne sont pas calculés dans la procédure de calcul des pondérations d'émission. L'utilisation d'un algorithme comportant de l'antibrouillage n'est pas strictement nécessaire dans la méthode mais il permet d'optimiser les performances.

Sans sortir du cadre de l'invention, le procédé dont un exemple vient d'être donné, à titre illustratif, s'applique dans le cas où le nombre d'antennes en émission est différent du nombre d'antennes en réception sur les différents utilisateurs. Par exemple, il est possible d'avoir deux antennes en émission et quatre antennes en réception au niveau de chaque utilisateur. Ceci est possible en regroupant les ressources de deux postes SIMO qui ont chacun une antenne d'émission et deux antennes de réception, une des deux antennes faisant émission/réception par exemple.

L'invention s'applique lorsque la modulation utilisée pour l'émission des données utiles $s_i(n)$ est une modulation série ou une modulation parallèle. Dans le cadre d'une forme d'onde parallèle, les pondérations $v_i$ utilisées dans les deux sens de la liaison peuvent être appliquées fréquence par fréquence (dans ce cas, il y a lieu d'estimer une matrice de canal et de calculer les pondérations à chaque fréquence) ou globalement sur le signal à émettre (un seul jeu de pondérations s'applique à chaque fréquence).

En présence de multitrajets de propagation, l'invention s'applique en utilisant le trajet le plus fort (celui qui correspond à l'énergie maximale reçue sur l'ensemble des capteurs pour chaque utilisateur) pour calculer les pondérations émission. La réception s'effectue en utilisant un algorithme d'égalisation multicapteurs connu de l'homme du métier.

Le procédé et le système selon l'invention offrent notamment les avantages suivants :

• Une augmentation de portée via une formation de faisceaux (beamforming) en émission et en réception,
• Une augmentation du débit, via l'optimisation du bilan de liaison (beamforming, diversités spatiale, temporelle, fréquentielle) et/ou le multiplexage spatial de trains binaires indépendants.

## Revendications

1. Procédé pour multiplexer spatialement des liaisons de communications de type multiple entrées multiple sorties MIMO, pour des liens descendants (DL) et/ou pour des liens montants (UL), au sein d'un réseau de communication comprenant au moins un nœud central NC comprenant un réseau émission/réception et au moins deux utilisateurs $T_1$, $T_2$, chacun desdits deux utilisateurs étant équipé d'un réseau émission/réception procédé dans lequel :

• Pour calculer les coefficients utilisés à l'émission (précodage) on impose aux deux vecteurs canaux associés à chacun des deux utilisateurs $T_1$, $T_2$, d'être orthogonaux au niveau du réseau de réception nœud central (UL) ou du réseau de réception des utilisateurs (DL), ledit procédé étant **caractérisé en ce que**
• On détermine les coefficients en émission d'un signal pour la liaison descendante DL émis du nœud central NC vers au moins chaque utilisateur $T_i$ comportant $K_e$ antennes d'émission, i = 1 et 2, en exécutant au moins les étapes suivantes :

∘ Calculer les vecteurs de précodage $v_1$ et $v_2$ associés respectivement aux deux utilisateurs $T_1$, $T_2$, en les recherchant comme une combinaison linéaire des vecteurs propres associés aux deux plus grandes valeurs propres de la décomposition en valeurs singulières SVD des matrices canal $H_1$ et $H_2$ de la liaison descendante, où $\alpha$ et $\lambda$ sont deux variables complexes :

$$v_1 = \frac{v_{11} + \alpha^* v_{12}}{\sqrt{1 + |\alpha|^2}}$$

$$v_2 = \frac{v_{21} + \lambda v_{22}}{\sqrt{1 + |\lambda|^2}}$$

$\alpha$ est solution d'une équation du second degré :

$$a\,\alpha^2 + b\,\alpha + c = 0$$

avec :

$$\begin{cases} a = \sigma_{12}^2(\sigma_{21}^2 - \sigma_{22}^2)v_{12}^H v_{21} v_{12}^H v_{22} \\ b = (\sigma_{12}^2\sigma_{21}^2 - \sigma_{22}^2\sigma_{11}^2)v_{11}^H v_{21} v_{12}^H v_{22} + (\sigma_{21}^2\sigma_{11}^2 - \sigma_{12}^2\sigma_{22}^2)v_{12}^H v_{21} v_{11}^H v_{22} \\ c = \sigma_{11}^2(\sigma_{21}^2 - \sigma_{22}^2)v_{11}^H v_{21} v_{11}^H v_{22} \end{cases}$$

on obtient deux valeurs pour $\alpha$ et on détermine pour chaque valeur $\alpha_1$, $\alpha_2$ la valeur de $\lambda$ associée par la formule:

$$\lambda = -\frac{\alpha\,\sigma_{12}^2\,v_{12}^H v_{21} + \sigma_{11}^2\,v_{11}^H v_{21}}{\alpha\,\sigma_{12}^2\,v_{12}^H v_{22} + \sigma_{11}^2\,v_{11}^H v_{22}}$$

∘ choisir parmi les deux couples de valeurs $(\alpha_1, \lambda_1)$ et $(\alpha_2, \lambda_2)$ le couple qui maximise une fonction des *SNIR* associés aux deux utilisateurs, définis comme suit :

$$\begin{cases} SNIR_1 = \dfrac{\sigma_{11}^2 + \sigma_{12}^2|\alpha|^2}{1 + |\alpha|^2} \\ SNIR_2 = \dfrac{\sigma_{21}^2 + \sigma_{22}^2|\lambda|^2}{1 + |\lambda|^2} \end{cases}$$

où $\sigma_{ij}^2$ correspond au carré de la valeur singulière j de la matrice canal Hi.

2. Procédé selon la revendication 1 **caractérisé en ce que** la fonction à maximiser correspond à Min(*SNIR₁, SNIR₂*) ou à la somme SNIR$_1$ + SNIR$_2$ ou à la somme log2(1 +*SNIR₁*) + log2(1 + *SNIR₂*).

3. Procédé selon la revendication 1 **caractérisé en ce que** le nombre d'antennes à l'émission est supérieur à deux, et **en ce qu'**il comporte une ou plusieurs étapes d'itération en recherchant les vecteurs $v_1(j)$ et $v_2(j')$ formés à partir des vecteurs propres $v_{11}$ et $v_{21}$ associés à la valeur maximale des valeurs singulières des SVD des deux matrices de canal des deux utilisateurs $T_1$, $T_2$ et aux vecteurs propres $v_{1j}$ et $v_{2j'}$,

$$\begin{cases} v_1(j) = \dfrac{v_{11} + \alpha(j)^* \, v_{1j}}{\sqrt{1 + |\alpha(j)|^2}} \\[4mm] v_2(j') = \dfrac{v_{21} + \lambda(j') \, v_{2j'}}{\sqrt{1 + |\lambda(j')|^2}} \end{cases}$$

où $j$ et $j'$ sont des indices compris entre deux et $K_e$ et en choisissant les valeurs de $\alpha(j)$ et $\lambda(j')$ qui conduisent à une maximisation d'une fonction de $SNIR_1$ et de $SNIR_2$.

4. Procédé selon l'une des revendications 1 ou 2 **caractérisé en ce que** pour un canal de propagation de dimension égale à un, on détermine les valeurs des coefficients des filtres de précodage à partir d'une combinaison linéaire du premier vecteur propre des SVD effectuées sur les deux matrices de canal et des vecteurs propres $v_{1j}$ et $v_{2j'}$ qui maximisent respectivement $\left| v_{1j}^H v_{21} \right|$ et $\left| v_{11}^H v_{2j'} \right|$.

5. Procédé selon l'une des revendications précédentes **caractérisé en ce que** dans le cas de la liaison montante d'un utilisateur vers le nœud central, le procédé comporte les étapes suivantes :

○ Calculer les pondérations pour l'émission $v_{ul,1}$ et $v_{ul,2}$ du signal dans un espace engendré par les deux premiers vecteurs propres issus des décompositions en valeurs singulières SVD effectuées sur les matrices de canal $H_{ul,1}$ et $H_{ul,2}$ :

$$v_{ul,1} = \frac{v_{ul,11} + \alpha^* v_{ul,12}}{\sqrt{1 + |\alpha|^2}}$$

$$v_{ul,2} = \frac{v_{ul,21} + \lambda \, v_{ul,22}}{\sqrt{1 + |\lambda|^2}}$$

où le couple $(\alpha, \lambda)$ est solution de l'équation :

$$(A + \lambda B) + \alpha(C + \lambda D) = 0$$

avec :

$$\begin{cases} A = \sigma_{ul,11}\sigma_{ul,21} u_{ul,11}^H u_{ul,21} \\ B = \sigma_{ul,11}\sigma_{ul,22} u_{ul,11}^H u_{ul,22} \\ C = \sigma_{ul,12}\sigma_{ul,21} u_{ul,12}^H u_{ul,21} \\ D = \sigma_{ul,12}\sigma_{ul,22} u_{ul,12}^H u_{ul,22} \end{cases}$$

○ choisir parmi les couples $(\alpha, \lambda)$ les couples qui maximisent une fonction des deux SINR ($SNIR_1$, $SNIR_2$) associés aux deux utilisateurs :

$$\begin{cases} SNIR_1 = \dfrac{\sigma_{ul,11}^2 + \sigma_{ul,12}^2 |\alpha|^2}{1 + |\alpha|^2} \\ SNIR_2 = \dfrac{\sigma_{ul,21}^2 + \sigma_{ul,22}^2 |\lambda|^2}{1 + |\lambda|^2} \end{cases}$$

6. Procédé selon la revendication 5 **caractérisé en ce que** les étapes sont itérées en recherchant les vecteurs $v_{ul,1}(j)$ et $v_{ul,2}(j')$ formés à partir des différents vecteurs propres associés aux deux matrices de canal suivant la formule :

$$v_1(j) = \frac{v_{11} + \alpha(j)^* \, v_{1j}}{\sqrt{1 + |\alpha(j)|^2}}$$

$$v_2(j') = \frac{v_{21} + \lambda(j') \, v_{2j'}}{\sqrt{1 + |\lambda(j')|^2}}$$

et choisir le couple $(j,j')$ conduisant à la maximisation d'une fonction des deux SINR ($SNIR_1, SNIR_2$).

7. Procédé selon l'une des revendications précédentes **caractérisé en ce que** les signaux sont transmis avec un format de trame qui se décompose en une sous-trame DL pour la liaison descendante et une sous-trame UL pour la liaison montante et **en ce que** chacune de ces sous-trames est décomposée en :

   - un slot MIMO_REF sur lequel les séquences d'apprentissage permettant l'estimation des matrices de canal associées à chaque utilisateur sont émises, (501), chaque antenne ayant sa propre séquence de référence,
   - un slot MIMO_DATA sur lequel les matrices de canal estimées pour chacun des utilisateurs sont envoyées, afin de calculer des vecteurs de précodage (510) pour l'autre sens de la liaison, en utilisant les pondérations calculées suivant les étapes de la revendication 1 et de la revendication 2 pour la liaison descendante (509) et en utilisant les pondérations calculées suivant les étapes des revendications 5 et 6 pour la liaison montante, (503),
   - N slots MIMO_DATA configurés pour émettre les données utiles à destination du nœud central NC, en utilisant les pondérations calculées suivant les étapes des revendications 2 et 3 pour la liaison descendante et les pondérations calculées suivant les étapes suivant les revendications 5 et 6 pour la liaison montante.

8. Procédé selon la revendication 7 **caractérisé en ce qu'**un slot MIMO_REF est formé d'un palier sur lequel chaque antenne d'émission émet sa propre séquence de référence obtenue à partir d'un shift cyclique effectué sur une séquence Cazac.

9. Système pour multiplexer spatialement des liaisons de communications de type multiple entrées multiple sorties MIMO, pour des liens descendants (DL) et/ou pour des liens montants (UL), au sein d'un réseau de communication, ledit système comprenant au moins un nœud central NC comprenant un réseau émission/réception et au moins deux utilisateurs $T_1$, $T_2$, chacun desdits deux utilisateurs étant équipé d'un réseau émission/réception (10, 20) **caractérisé en ce que** :

   ◦ chacun des deux utilisateurs est équipé d'un processeur (12, 22) configuré pour exécuter les étapes du procédé selon l'une des revendications 1 à 8, ledit processeur comprenant un module de précodage (13, 23) ayant pour fonction de déterminer les coefficients à utiliser au niveau de l'émission et un module de postcodage (14, 24) ayant pour fonction de déterminer les coefficients à utiliser au niveau de la réception,
   ◦ le nœud central comprend un processeur (32) configuré pour exécuter les étapes du procédé selon l'une des revendications 1 à 8, ledit processeur comprenant un module de précodage (33) configuré pour déterminer les coefficients à utiliser au niveau de l'émission et module de postcodage (34) ayant pour fonction de déterminer les coefficients à utiliser au niveau de la réception.

**Patentansprüche**

1. Verfahren zum räumlichen Multiplexen von Kommunikationsverbindungen des MIMO-(Multiple-Input Multiple-Output)-Typs für Abwärtsstrecke (Downlinks DL) und/oder für Aufwärtsübertragung (Uplinks UL) innerhalb eines Kommunikationsnetzwerks, das wenigstens einen zentralen Knotenpunkt NC umfasst, der ein Sende-/Empfangsnetz und wenigstens zwei Benutzer $T_1$, $T_2$ umfasst, wobei jeder der beiden Benutzer mit einem Sende-/Empfangsnetzwerk ausgestattet ist, wobei das Verfahren die folgenden Schritte beinhaltet:

   • Bewirken, zum Berechnen der zum Senden (Vorcodierung) benutzten Koeffizienten, dass die beiden mit jedem der beiden Benutzer $T_1$, $T_2$ assoziierten Kanalvektoren am Empfangsnetz-Zentralknotenpunkt (UL) oder am Empfangsnetz der Benutzer (DL) orthogonal sind, wobei das Verfahren **gekennzeichnet ist durch**:
   • Bestimmen der Koeffizienten beim Senden eines Signals für die Abwärtsstrecke (DL), gesendet vom Zentralknotenpunkt NC zu wenigstens jedem Benutzer $T_i$, der $K_e$ Sendeantennen umfasst, wobei i = 1 und 2 ist, unter Ausführung wenigstens der folgenden Schritte:

   ◦ Berechnen der jeweils mit den beiden Benutzern $T_1$, $T_2$ assoziierten Vorcodierungsvektoren $v_1$ und $v_2$, **durch** Suchen derselben als eine lineare Kombination von Eigenvektoren, die mit den zwei größten Eigenwerten der Singulärwertzerlegung SVD der Kanalmatrizen $H_1$ und $H_2$ der Abwärtsstrecke assoziiert sind, wobei $\alpha$ und $\lambda$ zwei komplexe Variablen sind:

$$v_1 = \frac{v_{11} + \alpha^* v_{12}}{\sqrt{1 + |\alpha|^2}}$$

$$v_2 = \frac{v_{21} + \lambda\, v_{22}}{\sqrt{1 + |\lambda|^2}}$$

$\alpha$ die Lösung einer Gleichung des zweiten Grades ist:

$$a\,\alpha^2 + b\,\alpha + c = 0$$

mit:

$$\begin{cases} a = \sigma_{12}^2(\sigma_{21}^2 - \sigma_{22}^2)v_{12}^H v_{21} v_{12}^H v_{22} \\ b = (\sigma_{12}^2\sigma_{21}^2 - \sigma_{22}^2\sigma_{11}^2)v_{11}^H v_{21} v_{12}^H v_{22} + (\sigma_{21}^2\sigma_{11}^2 - \sigma_{12}^2\sigma_{22}^2)v_{12}^H v_{21} v_{11}^H v_{22} \\ c = \sigma_{11}^2(\sigma_{21}^2 - \sigma_{22}^2)v_{11}^H v_{21} v_{11}^H v_{22} \end{cases}$$

zwei Werte für $\alpha$ erhalten werden und für jeden Wert $\alpha_1$, $\alpha_2$ der mit der folgenden Formel assoziierte Wert von $\lambda$ bestimmt wird:

$$\lambda = -\frac{\alpha\,\sigma_{12}^2\,v_{12}^H v_{21} + \sigma_{11}^2\,v_{11}^H v_{21}}{\alpha\,\sigma_{12}^2\,v_{12}^H v_{22} + \sigma_{11}^2\,v_{11}^H v_{22}}$$

   ◦ Auswählen desjenigen Paares aus den zwei Wertepaaren $(\alpha_1, \lambda_1)$ und $(\alpha_2, \lambda_2)$, das eine Funktion der mit den beiden Benutzern assoziierten *SNIR* maximiert, definiert wie folgt:

$$\begin{cases} SNIR_1 = \dfrac{\sigma_{11}^2 + \sigma_{12}^2 |\alpha|^2}{1 + |\alpha|^2} \\[3mm] SNIR_2 = \dfrac{\sigma_{21}^2 + \sigma_{22}^2 |\lambda|^2}{1 + |\lambda|^2} \end{cases}$$

wobei $\sigma_{ij}^2$ einem Quadrat des Singulärwertes j der Kanalmatrix Hi entspricht.

2. Verfahren nach Anspruch 1, **dadurch gekennzeichnet, dass** die zu maximierende Funktion Min($SNIR_1$, $SNIR_2$) oder der Summe $SNIR_1$ + $SNIR_2$ oder der Summe $\log2(1+SNIR_1)$ + $\log2(1+SNIR_2)$ entspricht.

3. Verfahren nach Anspruch 1, **dadurch gekennzeichnet, dass** die Anzahl von Sendeantennen größer als zwei ist, und dadurch, dass es wenigstens einen oder mehrere Wiederholungsschritte beim Suchen der Vektoren $v_1(j)$ und $v_2(j')$, gebildet auf der Basis der Eigenvektoren $v_{11}$ und $v_{21}$, assoziiert mit dem Höchstwert der Singulärwerte der SVD der zwei Kanalmatrizen der zwei Benutzer $T_1$, $T_2$ und den Eigenvektoren $v_{1j}$ und $v_{2j'}$

$$\begin{cases} \boldsymbol{v}_1(j) = \dfrac{\boldsymbol{v}_{11} + \alpha(j)^* \boldsymbol{v}_{1j}}{\sqrt{1 + |\alpha(j)|^2}} \\[3mm] \boldsymbol{v}_2(j') = \dfrac{\boldsymbol{v}_{21} + \lambda(j') \boldsymbol{v}_{2j'}}{\sqrt{1 + |\lambda(j')|^2}} \end{cases}$$

wobei $j$ und $j'$ Indexe zwischen zwei und $K_e$ sind, und beim Wählen der Werte von $\alpha(j)$ und $\lambda(j')$ beinhaltet, die eine Maximierung einer Funktion von $SNIR_1$ und $SNIR_2$ ergeben.

4. Verfahren nach Anspruch 1 oder 2, **dadurch gekennzeichnet, dass** für einen Ausbreitungskanal mit einer Dimension von gleich eins die Werte der Koeffizienten der Vorcodierungsfilter auf der Basis einer linearen Kombination aus dem ersten Eigenvektor von auf den beiden Kanalmatrizen durchgeführten SVD und den Eigenvektoren $v_{1j}$

und $v_{2j}$ bestimmt werden, die jeweils $\left|\boldsymbol{v}_{1j}^H \boldsymbol{v}_{21}\right|$ und $\left|\boldsymbol{v}_{11}^H \boldsymbol{v}_{2j'}\right|$ maximieren.

5. Verfahren nach einem der vorherigen Ansprüche, **dadurch gekennzeichnet, dass** im Falle der Abwärtsstrecke eines Benutzers zum Zentralknotenpunkt das Verfahren die folgenden Schritte beinhaltet:

  ◦ Berechnen der Gewichtungen für die Sendung $v_{ul,1}$ und $v_{ul,2}$ des Signals in einem Raum, erzeugt durch die beiden ersten Eigenvektoren von den auf den Kanalmatrizen $H_{ul,1}$ und $H_{ul,2}$ durchgeführten Singulärwertzerlegungen SVD:

$$v_{ul,1} = \frac{v_{ul,11} + \alpha^* v_{ul,12}}{\sqrt{1 + |\alpha|^2}}$$

$$v_{ul,2} = \frac{v_{ul,21} + \lambda\, v_{ul,22}}{\sqrt{1 + |\lambda|^2}}$$

wobei das Paar ($\alpha$, $\lambda$) die Lösung der folgenden Gleichung ist:

$$(A + \lambda B) + \alpha(C + \lambda D) = 0$$

mit:

$$\begin{cases} A = \sigma_{ul,11}\sigma_{ul,21}\boldsymbol{u}_{\boldsymbol{ul,11}}^{H}\boldsymbol{u}_{\boldsymbol{ul,21}} \\ B = \sigma_{ul,11}\sigma_{ul,22}\boldsymbol{u}_{\boldsymbol{ul,11}}^{H}\boldsymbol{u}_{\boldsymbol{ul,22}} \\ C = \sigma_{ul,12}\sigma_{ul,21}\boldsymbol{u}_{\boldsymbol{ul,12}}^{H}\boldsymbol{u}_{\boldsymbol{ul,21}} \\ D = \sigma_{ul,12}\sigma_{ul,22}\boldsymbol{u}_{\boldsymbol{ul,12}}^{H}\boldsymbol{u}_{\boldsymbol{ul,22}} \end{cases}$$

◦ Auswählen der Paare aus den Paaren ($\alpha$, $\lambda$), die eine Funktion der mit den beiden Benutzern assoziierten beiden SNIR ($SNIR_1$, $SNIR_2$) maximieren:

$$\begin{cases} SNIR_1 = \dfrac{\sigma_{ul,11}^2 + \sigma_{ul,12}^2 |\alpha|^2}{1 + |\alpha|^2} \\ SNIR_2 = \dfrac{\sigma_{ul,21}^2 + \sigma_{ul,22}^2 |\lambda|^2}{1 + |\lambda|^2} \end{cases} .$$

6. Verfahren nach Anspruch 5, **dadurch gekennzeichnet, dass** die Schritte durch Suchen der Vektoren $\upsilon_{ul,1}(j)$ und $\upsilon_{ul,2}(j')$, gebildet auf der Basis der verschiedenen mit den beiden Kanalmatrizen assoziierten Eigenvektoren gemäß der folgenden Formel:

$$\boldsymbol{v_1}(j) = \frac{\boldsymbol{v_{11}} + \alpha(j)^* \boldsymbol{v_{1j}}}{\sqrt{1 + |\alpha(j)|^2}}$$

$$\boldsymbol{v_2}(j') = \frac{\boldsymbol{v_{21}} + \lambda(j') \boldsymbol{v_{2j'}}}{\sqrt{1 + |\lambda(j')|^2}}$$

und Auswählen des Paares ($j$, $j'$) wiederholt werden, das die Maximierung einer Funktion der beiden SNIR ($SNIR_1$, $SNIR_2$) ergibt.

7. Verfahren nach einem der vorherigen Ansprüche, **dadurch gekennzeichnet, dass** die Signale mit einem Frame-Format übertragen werden, das sich in einen Sub-Frame DL für die Abwärtsstrecke und einen Sub-Frame UL für die Aufwärtsübertragung untergliedert, und dadurch, dass jeder dieser beiden Sub-Frames untergliedert wird in:

   - einen MIMO_REF-Slot, auf dem die Lernsequenzen, die die Schätzung der mit jedem Benutzer assoziierten Kanalmatrizen ermöglichen, gesendet werden (501), wobei jede Antenne ihre eigene Referenzsequenz hat,
   - einen MIMO_DATA-Slot, auf dem die für jeden der Benutzer geschätzten Kanalmatrizen gesendet werden, um die Vorcodierungsvektoren (510) für die andere Richtung der Verbindung zu berechnen, unter Nutzung der in den Schritten von Anspruch 1 und Anspruch 2 für die Abwärtsstrecke (501) berechneten Gewichtungen und unter Nutzung der in den Schritten der Ansprüche 5 und 6 für die Aufwärtsübertragung (503) berechneten Gewichtungen,
   - N MIMO_DATA-Slots, konfiguriert zum Senden der Nutzdaten zum Zentralknotenpunkt NC, unter Nutzung der in den Schritten der Ansprüche 2 und 3 für die Abwärtsstrecke berechneten Gewichtungen und der in den Schritten gemäß Anspruch 5 und 6 für die Aufwärtsübertragung berechneten Gewichtungen.

8. Verfahren nach Anspruch 7, **dadurch gekennzeichnet, dass** ein MIMO_REF-Slot aus einer Stufe besteht, auf der jede Sendeantenne ihre eigene Referenzsequenz sendet, erhalten auf der Basis einer auf einer Cazac-Sequenz bewirkten zyklischen Verschiebung.

9. System zum räumlichen Multiplexen von Kommunikationsverbindungen des MIMO-(Multiple-Input Multiple Output)-Typs für Abwärtsstrecke (DL) und/oder für Aufwärtsübertragung (UL) innerhalb eines Kommunikationsnetzwerks, wobei das System wenigstens einen zentralen Knotenpunkt NC umfasst, der ein Sende-/Empfangsnetzwerk und wenigstens zwei Benutzer $T_1$, $T_2$ umfasst, wobei jeder der beiden Benutzer mit einem Sende-/Empfangsnetzwerk (10, 20) ausgestattet ist, **dadurch gekennzeichnet, dass**:

∘ jeder der beiden Benutzer mit einem Prozessor (12, 22) ausgestattet ist, konfiguriert zum Ausführen der Schritte des Verfahrens nach einem der Ansprüche 1 bis 8, wobei der Prozessor ein Vorcodierungsmodul (13, 23) mit der Funktion des Bestimmens der beim Senden zu benutzenden Koeffizienten und ein Nachcodierungsmodul (14, 24) mit der Funktion des Bestimmens der beim Empfangen zu benutzenden Koeffizienten umfasst,
∘ der zentrale Knotenpunkt einen Prozessor (32) umfasst, konfiguriert zum Ausführen der Schritte des Verfahrens nach einem der Ansprüche 1 bis 8, wobei der Prozessor ein Vorcodierungsmodul (33), konfiguriert zum Bestimmen der beim Senden zu benutzenden Koeffizienten, und ein Nachcodierungsmodul (34) mit der Funktion des Bestimmens der beim Empfangen zu benutzenden Koeffizienten umfasst.

**Claims**

1. Method for spatially multiplexing MIMO communication links, for downlinks (DL) and/or uplinks (UL), within a communication network comprising at least one central node NC comprising an emission/reception network and at least two users $T_1$, $T_2$, each one of said two users being equipped with an emission/reception network, wherein:

• to calculate the coefficients used on emission (pre-coding), at least two channel vectors associated with each of the two users $T_1$, $T_2$ are required to be orthogonal at the central-node reception network (UL) or at the reception network of the users (DL), said method being **characterized in that**
• The emission coefficients of a signal for the downlink DL emitted from the central node NC to at least each user $T_i$ comprising $K_e$ emission antennas, i = 1 and 2, are determined by executing at least the following steps:
• Calculating the pre-coding vectors $v_1$ and $v_2$ respectively associated with the two users $T_1$, $T_2$ by searching for a linear combination of the eigenvectors associated with the two highest eigenvalues of the SVD of the channel matrices H$_1$ and H$_2$ of the downlink, where $\alpha$ and $\lambda$ are two complex variables:

$$v_1 = \frac{v_{11} + \alpha^* v_{12}}{\sqrt{1 + |\alpha|^2}}$$

$$v_2 = \frac{v_{21} + \lambda\, v_{22}}{\sqrt{1 + |\lambda|^2}}$$

$\alpha$ is a solution of an equation of the second degree:

$$a\,\alpha^2 + b\,\alpha + c = 0$$

with:

$$\begin{cases} a = \sigma_{12}^2(\sigma_{21}^2 - \sigma_{22}^2)v_{12}^H v_{21} v_{12}^H v_{22} \\ b = (\sigma_{12}^2\sigma_{21}^2 - \sigma_{22}^2\sigma_{11}^2)v_{11}^H v_{21} v_{12}^H v_{22} + (\sigma_{21}^2\sigma_{11}^2 - \sigma_{12}^2\sigma_{22}^2)v_{12}^H v_{21} v_{11}^H v_{22} \\ c = \sigma_{11}^2(\sigma_{21}^2 - \sigma_{22}^2)v_{11}^H v_{21} v_{11}^H v_{22} \end{cases}$$

two values are obtained for $\alpha$ and for each value $\alpha_1$, $\alpha_2$ the associated value of $\lambda$ is determined using the formula:

$$\lambda = -\frac{\alpha\,\sigma_{12}^2\,v_{12}^H v_{21} + \sigma_{11}^2\,v_{11}^H v_{21}}{\alpha\,\sigma_{12}^2\,v_{12}^H v_{22} + \sigma_{11}^2\,v_{11}^H v_{22}}$$

Choosing from the two pairs of values ($\alpha_1$, $\lambda_1$) and ($\alpha_2$, $\lambda_2$) the pair that maximizes a function of the *SNIRs* associated with the two users, which are defined as follows:

$$\begin{cases} SNIR_1 = \dfrac{\sigma_{11}^2 + \sigma_{12}^2 |\alpha|^2}{1 + |\alpha|^2} \\ SNIR_2 = \dfrac{\sigma_{21}^2 + \sigma_{22}^2 |\lambda|^2}{1 + |\lambda|^2} \end{cases}$$

where $\sigma_{ij}^2$ corresponds to the square of the singular value j of the channel matrix Hi.

2. Method according to Claim 1 **characterized in that** the function to be maximized corresponds to Min($SNIR_1$, $SNIR_2$) or to the sum $SNIR_1 +$, $SNIR_2$ or to the sum log2(1+$SNIR_1$) + log2(1+ $SNIR_2$).

3. Method according to Claim 1 **characterized in that** the number of emitter antennas is higher than two, and **in that** it comprises one or more steps of iteration in which are sought the vectors $\boldsymbol{v_1}(j)$ and $\boldsymbol{v_2}(j')$ *formed* from the eigenvectors $\boldsymbol{v_{11}}$ and $\boldsymbol{v_{21}}$ associated with the maximum value of the singular values of the SVDs of the two channel matrices of the two users $T_1$, $T_2$ and from the eigenvectors $\boldsymbol{v_{1j}}$ and $\boldsymbol{v_{2j'}}$,

$$\begin{cases} \boldsymbol{v_1}(j) = \dfrac{\boldsymbol{v_{11}} + \alpha(j)^* \, \boldsymbol{v_{1j}}}{\sqrt{1 + |\alpha(j)|^2}} \\ \boldsymbol{v_2}(j') = \dfrac{\boldsymbol{v_{21}} + \lambda(j') \, \boldsymbol{v_{2j'}}}{\sqrt{1 + |\lambda(j')|^2}} \end{cases}$$

where $j$ and $j'$ are indices comprised between two and $K_e$ and in which the values of $\alpha(j)$ and $\lambda(j')$ that lead to a maximization of a function of $SNIR_1$ and of $SNIR_2$ are chosen.

4. Method according to one of Claims 1 and 2, **characterized in that**, for a propagation channel of dimension equal to one, the values of the coefficients of the pre-coding filters are determined from a linear combination of the first eigenvector of the SVDs carried out on the two channel matrices and of the eigenvectors $\boldsymbol{v_{1j}}$ and $\boldsymbol{v_{2j}}$, that maximize $\left| v_{1j}^H v_{21} \right|$ and $\left| v_{11}^H v_{2j'} \right|$, respectively.

5. Method according to one of the preceding claims, **characterized in that** in the case of the uplink of a user to the central node, the method comprises the following steps:

   • calculating the weightings for the emission $\boldsymbol{v_{ul,1}}$ and $\boldsymbol{v_{ul,2}}$ of the signal in a space generated by the two first eigenvectors issued from the SVDs carried out on the channel matrices $H_{ul,1}$ and $H_{ul,2}$:

$$v_{ul,1} = \frac{v_{ul,11} + \alpha^* v_{ul,12}}{\sqrt{1 + |\alpha|^2}}$$

$$v_{ul,2} = \frac{v_{ul,21} + \lambda \, v_{ul,22}}{\sqrt{1 + |\lambda|^2}}$$

where the pair $(\alpha, \lambda)$ is the solution of the equation:

$$(A + \lambda B) + \alpha(C + \lambda D) = 0$$

with:

$$\begin{cases} A = \sigma_{ul,11}\sigma_{ul,21}\boldsymbol{u}_{ul,11}^{H}\boldsymbol{u}_{ul,21} \\ B = \sigma_{ul,11}\sigma_{ul,22}\boldsymbol{u}_{ul,11}^{H}\boldsymbol{u}_{ul,22} \\ C = \sigma_{ul,12}\sigma_{ul,21}\boldsymbol{u}_{ul,12}^{H}\boldsymbol{u}_{ul,21} \\ D = \sigma_{ul,12}\sigma_{ul,22}\boldsymbol{u}_{ul,12}^{H}\boldsymbol{u}_{ul,22} \end{cases}$$

• choosing among the pairs $(\alpha, \lambda)$ the pairs that maximize a function of the two SNIRs ($SNIR_1$, $SNIR_2$) associated with the two users:

$$\begin{cases} SNIR_1 = \dfrac{\sigma_{ul,11}^2 + \sigma_{ul,12}^2 |\alpha|^2}{1 + |\alpha|^2} \\ SNIR_2 = \dfrac{\sigma_{ul,21}^2 + \sigma_{ul,22}^2 |\lambda|^2}{1 + |\lambda|^2} \end{cases}$$

6. Method according to Claim 5, **characterized in that** the steps are iterated and the vectors $\boldsymbol{v}_{ul,1}(j)$ and $\boldsymbol{v}_{ul,2}(j')$ formed from the various eigenvectors associated with the two channel matrices, according to the formula:

$$\boldsymbol{v}_1(j) = \frac{\boldsymbol{v}_{11} + \alpha(j)^* \boldsymbol{v}_{1j}}{\sqrt{1 + |\alpha(j)|^2}}$$

$$\boldsymbol{v}_2(j') = \frac{\boldsymbol{v}_{21} + \lambda(j') \boldsymbol{v}_{2j'}}{\sqrt{1 + |\lambda(j')|^2}}$$

are sought and the pair $(j,j')$ leading to maximization of a function of the two SNIRs ($SNIR_1$, $SNIR_2$) is chosen.

7. Method according to one of the preceding claims, **characterized in that** the signals are transmitted with a frame format that is decomposed into a DL subframe for the downlink and a UL subframe for the uplink and **in that** each of these subframes is decomposed into:

   - a MIMO_REF slot in which the training sequences allowing the channel matrices associated with each user to be estimated are emitted, (501), each antenna having its own reference sequence,
   - a MIMO_DATA slot in which the channel matrices estimated for each of the users are sent, in order to calculate pre-coding vectors (510) for the other direction of the link, using the weightings calculated in the steps of Claim 1 and of Claim 2 for the downlink (509) and using the weightings calculated in the steps of Claims 5 and 6 that the uplink, (503),
   - N MIMO_DATA slots configured to contain useful data intended for the central node NC, emitted using the weightings calculated in the steps of Claims 2 and 3 for the downlink and the weightings calculated in the steps of Claims 5 and 6 for the uplink.

8. Method according to Claim 7, **characterized in that** a MIMO_REF slot is formed of a block in which each emitter antenna emits its own reference sequence, which sequence is obtained from a cyclic shift carried out on a Cazac sequence.

9. System for spatially multiplexing MIMO communication links, for downlinks (DL) and/or for uplinks (UL), within a communication network, said system comprising at least one central node NC comprising an emission/reception network and at least two users $T_1$, $T_2$, each one of said two users being equipped with an emission/reception network (10, 20) wherein:

   • each one of both users is equipped with a processor (12, 22) configured to carry out the steps of the method according to one of Claims 1 to 8, said processing device comprising a pre-coding module (13, 23) having the function of determining the coefficients to be used on emission and a post-coding module (14, 24) having the function of determining the coefficients to be used on reception,

• the central node comprises a processor (32) configured to execute the steps of the method according to one of Claims 1 to 8, said processing device comprising a pre-coding module (33) configured to determine the coefficients to be used on emission and a post-coding module (34) having the function of determining the coefficients to be used on reception.

FIG.1

EP 3 493 420 B1

FIG.2

FIG.3

**DL**

41     43     44

**UL**   $h_1$ et $h_2$   Informations utiles
*N slots*

41     43     44

$h_1$ et $h_2$   Informations utiles
*N slots*

Sous-trame DL *n* : 100ms     Sous-trame UL *n* : 100ms

Trame *n* : 200ms

Slot MIMO_DATA (2 paliers)

Slot MIMO_REF (1 palier)

## FIG.4

EP 3 493 420 B1

FIG.5

Trame (n)

Sous-trame DL

Sous-trame UL (n)

DL :
$h_1$ et $h_2$

DL :
Informations utiles
N slots

DL:
REF

UL:
$h_1$ et $h_2$

UL :
Informations utiles
N slots

UL:
REF

DL:
$h_1$ et $h_2$

DL :
Informations utiles N
slots

DL:
REF

509        505        501

NC

504        512        508        509        505        501

$h_{1,UL}$ et $h_{2,UL}$

$v_{1,DL}$ et $v_{2,DL}$

DL(n)        UL(n)        DL(n+1)

503        511        507

T1        510        506        502        510        506        502

$h_{1,DL}$

$v_{1,UL}$

503        511        507

T2        510        506        502        510        506        502

$h_{2,DL}$

$v_{2,UL}$

Tx
Slot MIMO_DATA (2 paliers)
Slot MIMO_REF (1 palier)

Temps mort (entre chaque trame)

Rx
Estimation de canal
Calcul de pondérations émission
Démodulation DATA

EP 3 493 420 B1

## RÉFÉRENCES CITÉES DANS LA DESCRIPTION

**Documents brevets cités dans la description**

- US 6243415 B

**Littérature non-brevet citée dans la description**

- **A. JAFAR ; S. SHAMAI.** Degrees of freedom region of the MIMO X channel. *IEEE Transactions on Information Theory,* 2008, vol. 54 (1), 151-170
- **R. CADAMBE ; S. A. JAFAR.** Interference alignment and degrees of freedom of the K-User interference channel. *IEEE Transactions on Information Theory,* 2008, vol. 54 (8), 3425-3441
- **R. CADAMBE ; S. A. JAFAR.** Interference Alignment and the Degrees of Freedom of Wireless X Networks. *IEEE Trans. Inf. Theory,* Septembre 2009, vol. 55 (9
- **E. AYCAN BEYAZIT.** Interference Alignment Techniques for Heterogeneous Wireless Networks. *Thèse de doctorat,* Septembre 2016
- On the Mutual Orthogonality of Millimeter-Wave Massive MIMO Channels. **NGUYEN SINH LE HONG et al.** IEEE 81ST VEHICULAR TECHNOLOGY CONFERENCE (VTC SPRING). IEEE, 11 Mai 2015, 1-5
- Démodulation Reference Signal Design and Channel Estimation for LTE-Advanced Uplink. **X. HOU ; H. KAYAMA.** Advances in Vehicular Networking Technologies. 2011